# EUROPEAN PATENT APPLICATION

(11) **EP 4 096 272 A1**
(43) Date of publication of application: **30.11.2022**
(21) Application number: 21752887.6
(22) Date of filing: 09.02.2021
(51) Int. Cl.: H04W 24/00

(54) **METHOD AND APPARATUS FOR CONFIGURING MINIMIZATION OF DRIVE-TESTS (MDT)**

(30) Priority: 13.02.2020 CN 202010090624
(71) Applicant: Huawei Technologies Co., Ltd., Longgang Shenzhen, Guangdong 518129 (CN)
(72) Inventor: HU, Xingxing, Shenzhen, Guangdong 518129 (CN); ZHANG, Hongping, Shenzhen, Guangdong 518129 (CN); ZENG, Qinghai, Shenzhen, Guangdong 518129 (CN); ZHANG, Hongzhuo, Shenzhen, Guangdong 518129 (CN); CHEN, Jun, Shenzhen, Guangdong 518129 (CN)
(74) Representative: Grünecker Patent- und Rechtsanwälte PartG mbB
(86) International application number: PCT/CN2021/076188
(87) International publication number: WO 2021/160111

(57) **Abstract**

This application provides a method and an apparatus for configuring minimization of drive-tests MDT. The method for configuring MDT includes: A terminal device receives first MDT measurement configuration information and first indication information from a first network device. The terminal device learns, based on the first indication information, whether a type of first MDT configured by the first network device for the terminal device is signaling based MDT or management based MDT. Further, after establishing a connection to a second network device, the terminal device sends second indication information to the second network device, and reports the type of the first MDT that has been configured for the terminal device. In this way, if the second network device reconfigures MDT for the terminal device, a case in which management based MDT is configured for the terminal device, and the management based MDT overwrites signaling based MDT previously configured by the first network device for the terminal device can be avoided, thereby increasing a possibility that the management based MDT does not overwrite the configured signaling based MDT.

## Description

This application claims priority to Chinese Patent Application No. 202010090624.2, filed with the China National Intellectual Property Administration on February 13, 2020 and entitled "METHOD AND APPARATUS FOR CONFIGURING MINIMIZATION OF DRIVE-TESTS MDT", which is incorporated herein by reference in its entirety.

### TECHNICAL FIELD

This application relates to the field of communication technologies, and more specifically, to a method and an apparatus for configuring minimization of drive-tests MDT.

### BACKGROUND

In a current protocol, it is mentioned that a priority of signaling based minimization of drive-tests (minimization of drive-tests, MDT) is higher than a priority of management based MDT. In other words, in a process of configuring MDT for a terminal device on a network side, it should be ensured that management based MDT cannot overwrite signaling based MDT that has been previously configured for the terminal device. However, in the conventional technology, no solution is provided to ensure that the management based MDT does not overwrite the configured signaling based MDT.

### SUMMARY

This application provides a method and an apparatus for configuring minimization of drive-tests MDT, to expect to increase a possibility that management based MDT does not overwrite configured signaling based MDT.

According to a first aspect, a method for configuring MDT is provided. The method for configuring MDT may be performed by a terminal device, or may be performed by a chip or a circuit used in the terminal device. This is not limited in this application. For ease of description, the following uses an example in which the method is performed by the terminal device for description.

The method for configuring MDT includes:
A terminal device receives first MDT measurement configuration information and first indication information from a first network device, where the first indication information is used to indicate that a type of first MDT is signaling based MDT or management based MDT, and the first MDT measurement configuration information includes configuration information required by the terminal device to perform first MDT measurement. The terminal device sends second indication information to a second network device, where the second indication information is used to indicate the type of the first MDT, and the second network device is the same as or different from the first network device.

According to the method for configuring MDT provided in this embodiment of this application, the first network device configures the first MDT for the terminal device and notifies the terminal device of the type of the first MDT. When being connected to the second network device, the terminal device reports, to the second network device, the type of the first MDT configured for the terminal device. In this way, if the second network device reconfigures MDT for the terminal device, a case in which management based MDT is configured for the terminal device, and the management based MDT overwrites signaling based MDT previously configured by the first network device for the terminal device can be avoided, thereby increasing a possibility that the management based MDT does not overwrite the configured signaling based MDT.

With reference to the first aspect, in some implementations of the first aspect, that the terminal device sends second indication information to a second network device includes: The terminal device sends a first radio resource control (radio resource control, RRC) message to the second network device, where the first RRC message includes the second indication information, and the first RRC message includes any one of the following messages: an RRC reconfiguration complete message, an RRC reestablishment complete message, or an RRC resume complete message.

The terminal device may report the type of the first MDT to the second network device by using a plurality of RRC messages, so that flexibility of the solution is improved.

With reference to the first aspect, in some implementations of the first aspect, the method further includes: The terminal device sends the second indication information to a core network device.

According to the method for configuring MDT provided in this embodiment of this application, the terminal device may further report, to the core network device, the type of the first MDT configured by the first network device for the terminal device, so that the core network device can learn of the type of the first MDT configured for the terminal device. In this way, when the core network device subsequently notifies an access network device to configure MDT for the terminal device, the management based MDT can be prevented from overwriting the configured signaling based MDT.

With reference to the first aspect, in some implementations of the first aspect, the method further includes: The terminal device performs MDT measurement based on the first MDT measurement configuration information to obtain a first measurement result. The terminal device sends the first measurement result and the second indication information to the second network device.

According to the method for configuring minimization of drive-tests MDT provided in this embodiment of this application, the terminal device may perform MDT measurement based on the first MDT measurement configuration information configured by the first network device, and obtain the first measurement result. After being connected to the second network device, the terminal device may report, to the second network device, the first measurement result obtained through measurement. A message for reporting the first measurement result may carry the second indication information, in other words, the terminal device may include the second indication information in the message for reporting the measurement result. In this way, coupling between the solution provided in this application and an existing measurement result reporting solution is increased.

With reference to the first aspect, in some implementations of the first aspect, that the terminal device sends the first measurement result and the second indication information to the second network device includes: The terminal device sends an uplink terminal device information response message to the second network device, where the uplink terminal device information response message includes the first measurement result and the second indication information.

In a possible implementation, the message used by the terminal device to report the first measurement result to the second network device may be the uplink terminal device information response message. A difference between the method for configuring MDT provided in this embodiment of this application and an existing solution in which an uplink terminal device information response message carries a first measurement result but does not carry second indication information is as follows: In the solution provided in this application, the uplink terminal device information response message carries the first measurement result and the second indication information.

With reference to the first aspect, in some implementations of the first aspect, before the terminal device sends the first measurement result to the second network device, the method for configuring MDT further includes: The terminal device sends third indication information to the second network device, where the third indication information is used to indicate a size of a first buffer (buffer) required for performing uplink data compression UDC based transmission on the first measurement result.

According to the method for configuring MDT provided in this embodiment of this application, the terminal device may send the third indication information to the second network device, where the third indication information indicates the size of the first buffer required for performing UDC based transmission on the first measurement result reported by the terminal device. In this way, the second network device may configure, with reference to the size of the first buffer reported by the terminal device, a second buffer based on which UDC based transmission is performed on the first measurement result, to improve accuracy of determining a buffer based on which the terminal device transmits the first measurement result through UDC.

With reference to the first aspect, in some implementations of the first aspect, the method further includes: The terminal device receives buffer configuration information from the second network device, where the buffer configuration information is used to configure a second buffer. That the terminal device sends the first measurement result to the second network device includes: The terminal device sends the first measurement result to the second network device by using a second RRC message, where uplink data compression processing is performed on the second RRC message based on the second buffer, and the buffer configuration information is determined by the second network device based on the received third indication information.

Further, the second network device may configure the second buffer for the terminal device based on the size of the first buffer reported by the terminal device. The terminal device includes the first measurement result in the second RRC message, and UDC processing is performed on the second RRC message based on the second buffer.

With reference to the first aspect, in some implementations of the first aspect, in a possible implementation, the second RRC message is the uplink terminal device information response message.

With reference to the first aspect, in some implementations of the first aspect, the method further includes: The terminal device receives fourth indication information from the second network device, where the fourth indication information is used to indicate that the terminal device transmits a second measurement result through a second RLC entity, the second RLC entity is different from a first RLC entity for transmitting the first measurement result, and the second measurement result is a measurement result that needs to be reported after or before the first measurement result is reported.

According to the method for configuring MDT provided in this embodiment of this application, the second network device may send the fourth indication information to the terminal device when the second network device needs to change a buffer configuration. After receiving the fourth indication information of the second network device, the terminal device can change, based on the fourth indication information, an RLC entity for transmitting a measurement result, without reestablishing a connection between the terminal device and the second network device.

According to a second aspect, a method for configuring MDT is provided. The method for configuring MDT may be performed by a first network device, or may be performed by a chip or a circuit used in the first network device. This is not limited in this application. For ease of description, the following uses an example in which the method is performed by the first network device for description.

The method for configuring MDT includes:
A first network device determines first MDT measurement configuration information and first indication information, where the first indication information is used to indicate that a type of first MDT is signaling based MDT or management based MDT, and the first MDT measurement configuration information includes configuration information required by a terminal device to perform first MDT measurement. The first network device sends the first MDT measurement configuration information and the first indication information to the terminal device.

According to the method for configuring MDT provided in this embodiment of this application, when the first network device configures the first MDT for the terminal device, the first network device may notify the terminal device of the type of the first MDT by using the first indication information, so that the terminal device can learn of the type of the first MDT configured by the first network device for the terminal device, and the terminal device can be prevented from accepting a configuration of MDT whose priority is lower than that of the type of the first MDT.

With reference to the second aspect, in some implementations of the second aspect, the method further includes: The first network device receives fifth indication information from a core network device, where the fifth indication information is used to indicate the type of the first MDT; and/or the first network device receives signaling based MDT configuration information from the core network device.

When the core network device learns of the type of the first MDT configured for the terminal device, the core network device may send the fifth indication information to the first network device, so that the first network device learns of the type of the first MDT configured for the terminal device. In addition, the core network device may further send the signaling based MDT configuration information to the first network device, so that the first network device can configure the signaling based MDT for the terminal device.

With reference to the second aspect, in some implementations of the second aspect, when the terminal device is handed over from the first network device to a third network device, the method further includes: The first network device sends sixth indication information to the third network device, where the sixth indication information is used to indicate that the first network device configures the signaling based MDT for the terminal device.

In a network device handover scenario (for example, the first network device is a source network device and the third network device is a target network device, or the first network device is a master network device and the third network device is a changed or newly added secondary network device), the first network device may send the sixth indication information to the third network device, so that the third network device learns of the type of the first MDT configured for the terminal device, to avoid a case in which when the third network device subsequently configures MDT for the terminal device, the management based MDT overwrites the configured signaling based MDT.

According to a third aspect, a method for configuring MDT is provided. The method for configuring MDT may be performed by a second network device, or may be performed by a chip or a circuit used in the second network device. This is not limited in this application. For ease of description, the following uses an example in which the method is performed by the second network device for description.

The method for configuring minimization of drive-tests MDT includes:
A second network device receives second indication information from a terminal device, where the second indication information is used to indicate a type of first MDT, the first MDT is MDT configured by a first network device for the terminal device, and the second network device is the same as or different from the first network device. The second network device determines the type of the first MDT based on the second indication information.

According to the method for configuring MDT provided in this embodiment of this application, when being connected to the second network device, the terminal device may report, to the second network device, the type of the first MDT configured for the terminal device. In this way, if the second network device reconfigures MDT for the terminal device, a case in which management based MDT is configured for the terminal device, and the management based MDT overwrites signaling based MDT previously configured by the first network device for the terminal device can be avoided, thereby increasing a possibility that the management based MDT does not overwrite the configured signaling based MDT.

With reference to the third aspect, in some implementations of the third aspect, that a second network device receives second indication information from a terminal device includes: The second network device receives a first radio resource control RRC message from the terminal device, where the first RRC message includes the second indication information, and the first RRC message includes any one of the following messages: an RRC reconfiguration complete message, an RRC reestablishment complete message, or an RRC resume complete message.

The terminal device may report the type of the first MDT to the second network device by using a plurality of RRC messages, so that flexibility of the solution is improved.

With reference to the third aspect, in some implementations of the third aspect, the method includes: The second network device receives fifth indication information from a core network device, where the fifth indication information is used to indicate the type of the first MDT; and/or the second network device receives signaling based MDT configuration information from the core network device.

When the core network device learns of the type of the first MDT configured for the terminal device, the core network device may send the fifth indication information to the second network device, so that the second network device learns of the type of the first MDT configured for the terminal device. In addition, the core network device may further send the signaling based MDT configuration information to the second network device, so that the second network device can configure the signaling based MDT for the terminal device.

With reference to the third aspect, in some implementations of the third aspect, that a second network device receives second indication information from a terminal device includes: The second network device receives an uplink terminal device information response message from the terminal device, where the uplink terminal device information response message includes a first measurement result and the second indication information.

In a possible implementation, a message used by the terminal device to report the first measurement result to the second network device may be the uplink terminal device information response message. In the method for configuring MDT provided in this embodiment of this application, the uplink terminal device information response message carries the first measurement result and the second indication information.

With reference to the third aspect, in some implementations of the third aspect, before the second network device receives the first measurement result from the terminal device, the method further includes: The second network device receives third indication information from the terminal device, where the third indication information is used to indicate a size of a first buffer buffer required for performing uplink data compression UDC based transmission on the first measurement result.

According to the method for configuring MDT provided in this embodiment of this application, the terminal device may send the third indication information to the second network device, where the third indication information indicates the size of the first buffer required for performing UDC based transmission on the first measurement result reported by the terminal device. In this way, the second network device may configure, with reference to the first buffer reported by the terminal device, a second buffer based on which UDC based transmission is performed on the first measurement result, to improve accuracy of the solution.

With reference to the third aspect, in some implementations of the third aspect, the method further includes: The second network device sends buffer configuration information to the terminal device, where the buffer configuration information is used to configure a second buffer. That the second network device receives the first MDT measurement result from the terminal device includes: The second network device receives the first MDT measurement result from the terminal device by using a second RRC message, where UDC processing is performed on the second RRC message based on the second buffer.

Further, the second network device may configure the second buffer for the terminal device based on the size of the first buffer reported by the terminal device. The terminal device includes the first measurement result in the second RRC message, and UDC processing is performed on the second RRC message based on the second buffer.

With reference to the third aspect, in some implementations of the third aspect, in a possible implementation, the second RRC message is the uplink terminal device information response message.

With reference to the third aspect, in some implementations of the third aspect, the method further includes: The second network device sends fourth indication information to the terminal device, where the fourth indication information is used to indicate that the terminal device transmits a second MDT measurement result through a second RLC entity, and the second RLC entity is different from a first RLC entity for transmitting the first MDT measurement result.

According to the method for configuring MDT provided in this embodiment of this application, after receiving the fourth indication information of the second network device, the terminal device can change, based on the fourth indication information, an RLC entity for transmitting a measurement result.

According to a fourth aspect, a method for configuring MDT is provided. The method for configuring MDT may be performed by a core network device, or may be performed by a chip or a circuit used in the core network device. This is not limited in this application. For ease of description, the following uses an example in which the method is performed by the core network device for description.

The method for configuring MDT includes:
A core network device receives second indication information from a terminal device, where the second indication information is used to indicate a type of first MDT, the first MDT is MDT configured by a first network device for the terminal device, and a second network device is the same as or different from the first network device. The core network device sends fifth indication information to the first network device or the second network device based on the second indication information, where the fifth indication information is used to indicate the type of the first MDT; or the core network device sends signaling based MDT configuration information to the first network device or the second network device based on the second indication information.

When the core network device learns of the type of the first MDT configured for the terminal device, the core network device may send the fifth indication information to the first network device or the second network device, so that the first network device or the second network device learns of the type of the first MDT configured for the terminal device. In addition, the core network device may further send the signaling based MDT configuration information to the first network device or the second network device, so that the first network device or the second network device can configure signaling based MDT for the terminal device.

According to a fifth aspect, a method for configuring MDT is provided. The method for configuring MDT may be performed by a terminal device, or may be performed by a chip or a circuit used in the terminal device. This is not limited in this application. For ease of description, the following uses an example in which the method is performed by the terminal device for description.

The method for configuring MDT includes:
A terminal device receives first MDT measurement configuration information and first indication information from a first network device, where the first indication information is used to indicate that a type of first MDT is signaling based MDT or management based MDT. The terminal device sends second indication information to a core network device, where the second indication information is used to indicate the type of the first MDT.

According to the method for configuring MDT provided in this embodiment of this application, the first network device configures the first MDT for the terminal device and notifies the terminal device of the type of the first MDT. When being connected to a second network device, the terminal device reports, to the core network device, the type of the first MDT configured for the terminal device. In this way, the core network device can learn of the type of the first MDT configured for the terminal device.

With reference to the fifth aspect, in some implementations of the fifth aspect, that the terminal device sends second indication information to a core network device includes: The terminal device sends a non-access stratum NAS message to the core network device, where the NAS message includes the second indication information.

The terminal device may report the type of the first MDT to the core network device by using the NAS message, to increase coupling between the solution and an existing signaling procedure.

According to a sixth aspect, a method for configuring MDT is provided. The method for configuring MDT may be performed by a first network device, or may be performed by a chip or a circuit used in the first network device. This is not limited in this application. For ease of description, the following uses an example in which the method is performed by the first network device for description.

The method for configuring MDT includes:
A first network device determines first MDT measurement configuration information and first indication information, where the first indication information is used to indicate that a type of MDT is signaling based MDT or management based MDT. The first network device sends the first MDT measurement configuration information and the first indication information to a terminal device.

According to the method for configuring MDT provided in this embodiment of this application, the first network device configures the first MDT for the terminal device and notifies the terminal device of the type of the first MDT, so that the terminal device can learn of the type of the first MDT configured by the first network device for the terminal device.

With reference to the sixth aspect, in some implementations of the sixth aspect, the method further includes: The first network device receives fifth indication information from a core network device, where the fifth indication information is used to indicate a type of the first MDT; or
the first network device receives signaling based MDT configuration information from the core network device.

When the core network device learns of the type of the first MDT configured for the terminal device, the core network device may send the fifth indication information to the first network device, so that the first network device learns of the type of the first MDT configured for the terminal device. In addition, the core network device may further send the signaling based MDT configuration information to the first network device, so that the first network device can configure the signaling based MDT for the terminal device.

According to a seventh aspect, a method for configuring MDT is provided. The method for configuring MDT may be performed by a second network device, or may be performed by a chip or a circuit used in the second network device. This is not limited in this application. For ease of description, the following uses an example in which the method is performed by the second network device for description.

The method for configuring MDT includes:
A second network device receives fifth indication information from a core network device, where the fifth indication information is used to indicate a type of first MDT; or a second network device receives signaling based MDT configuration information from a core network device.

When the core network device learns of the type of the first MDT configured for a terminal device, the core network device may send the fifth indication information to the second network device, so that the second network device learns of the type of the first MDT configured for the terminal device. In addition, the core network device may further send the signaling based MDT configuration information to the second network device, so that the second network device can configure signaling based MDT for the terminal device.

According to an eighth aspect, a method for configuring MDT is provided. The method for configuring MDT may be performed by a core network device, or may be performed by a chip or a circuit used in the core network device. This is not limited in this application. For ease of description, the following uses an example in which the method is performed by the core network device for description.

The method for configuring MDT includes:
A core network device receives second indication information from a terminal device, where the second indication information is used to indicate a type of first MDT, the first MDT is MDT configured by a first network device for the terminal device, and a second network device is the same as or different from the first network device. The core network device sends fifth indication information to the first network device or the second network device based on the second indication information, where the fifth indication information is used to indicate the type of the first MDT; or the core network device sends signaling based MDT configuration information to the first network device or the second network device based on the second indication information.

When the core network device learns of the type of the first MDT configured for the terminal device, the core network device may send the fifth indication information to the first network device or the second network device, so that the first network device or the second network device learns of the type of the first MDT configured for the terminal device. In addition, the core network device may further send the signaling based MDT configuration information to the first network device or the second network device, so that the first network device or the second network device can configure signaling based MDT for the terminal device.

According to a ninth aspect, a method for configuring MDT is provided. The method for configuring MDT may be performed by a terminal device, or may be performed by a chip or a circuit used in the terminal device. This is not limited in this application. For ease of description, the following uses an example in which the method is performed by the terminal device for description.

The method for configuring MDT includes:
A terminal device receives first MDT measurement configuration information and first indication information from a first network device, where the first indication information is used to indicate that a type of first MDT is signaling based MDT or management based MDT. The terminal device learns of the type of the first MDT based on the first indication information.

According to the method for configuring MDT provided in this embodiment of this application, the first network device configures the first MDT for the terminal device and notifies the terminal device of the type of the first MDT, so that the terminal device can learn of the type of the currently configured first MDT.

According to a tenth aspect, a method for configuring MDT is provided. The method for configuring MDT may be performed by a first network device, or may be performed by a chip or a circuit used in the first network device. This is not limited in this application. For ease of description, the following uses an example in which the method is performed by the first network device for description.

The method for configuring MDT includes:
A first network device determines sixth indication information, where the sixth indication information is used to indicate that the first network device configures signaling based MDT for a terminal device. The first network device sends the sixth indication information to a third network device.

In a network device handover scenario (for example, the first network device is a source network device and the third network device is a target network device, or the first network device is a master node and the third network device is a changed or newly added secondary node), the first network device may send the sixth indication information to the third network device, so that the third network device learns of the type of the first MDT configured for the terminal device, to avoid a case in which when MDT is subsequently configured for the terminal device, management based MDT overwrites the previous signaling based MDT.

It should be understood that a case in which network device handover occurs is not limited in this embodiment of this application. However, it should be noted that, if network device handover occurs, the first network device can learn of the handover.

For example, the terminal device sends a measurement result to the first network device (for example, the terminal device periodically sends, to the first network device, signal quality that is obtained through measurement and that is of a neighboring cell or signal quality that is obtained through measurement and that is of a neighboring cell that meets a specific condition, where the measurement result carries a cell identifier of a neighboring cell). The first network device determines, based on the signal quality of the neighboring cell reported by the terminal device, whether the terminal device needs to be handed over to a third network device corresponding to the cell identifier of the neighboring cell reported by the terminal device, so that the third network device can provide a service for the terminal device. Therefore, the first network device can learn, based on the measurement result of the terminal device, that the third network device is a target network device.

For another example, the first network device is used as a master node in a communication system. If a secondary node changes, the master node needs to trigger a secondary node change procedure (for example, the terminal device reports a measurement result to the first network device, where the measurement result carries a cell identifier of a neighboring cell, and the first network device determines, based on the measurement result, that the secondary node change procedure needs to be performed). Therefore, the first network device can learn, based on secondary node change information triggered by the first network device, that the changed or newly added secondary node is the third network device.

With reference to the tenth aspect, in some implementations of the tenth aspect, the method further includes: The first network device sends first MDT measurement configuration information and first indication information to the terminal device, where the first indication information is used to indicate that a type of first MDT is signaling based MDT or management based MDT.

According to the method for configuring MDT provided in this embodiment of this application, the first network device configures the first MDT for the terminal device and notifies the terminal device of the type of the first MDT, so that the terminal device can learn of the type of the first MDT configured by the first network device for the terminal device.

According to an eleventh aspect, a method for configuring MDT is provided. The method for configuring MDT may be performed by a third network device, or may be performed by a chip or a circuit used in the third network device. This is not limited in this application. For ease of description, the following uses an example in which the method is performed by the third network device for description.

The method for configuring MDT includes:
A third network device receives sixth indication information from a first network device, where the sixth indication information is used to indicate that the first network device configures signaling based MDT for a terminal device. The third network device determines, based on the sixth indication information, that management based MDT does not need to be configured for the terminal device.

In a network device handover scenario (for example, the first network device is a source network device and the third network device is a target network device, or the first network device is a master node and the third network device is a changed or newly added secondary node), the first network device may send the sixth indication information to the third network device, so that the third network device learns of a type of first MDT configured for the terminal device, to avoid a case in which when MDT is subsequently configured for the terminal device, the management based MDT overwrites the previous signaling based MDT.

According to a twelfth aspect, a method for configuring MDT is provided. The method for configuring MDT may be performed by a terminal device, or may be performed by a chip or a circuit used in the terminal device. This is not limited in this application. For ease of description, the following uses an example in which the method is performed by the terminal device for description.

The method for configuring MDT includes:
A terminal device determines third indication information, where the third indication information is used to indicate a size of a first buffer buffer required for performing UDC based transmission on a first measurement result, and the first measurement result is a measurement result obtained by the terminal device by performing MDT measurement. The terminal device sends the third indication information to a second network device.

According to the method for configuring MDT provided in this embodiment of this application, the terminal device may send the third indication information to the second network device, where the third indication information indicates the size of the first buffer required for performing UDC based transmission on the first measurement result reported by the terminal device. In this way, the second network device may configure, with reference to the first buffer reported by the terminal device, a second buffer based on which UDC based transmission is performed on the first measurement result, to improve accuracy of the solution.

With reference to the twelfth aspect, in some implementations of the twelfth aspect, the method further includes: The terminal device receives buffer configuration information from the second network device, where the buffer configuration information is used to configure a second buffer. That the terminal device sends the first measurement result to the second network device includes: The terminal device sends the first measurement result to the second network device by using a second RRC message, where uplink data compression processing is performed on the second RRC message based on the second buffer.

Further, the second network device may configure the second buffer for the terminal device based on the size of the first buffer reported by the terminal device. The terminal device includes the first measurement result in the second RRC message, and UDC processing is performed on the second RRC message based on the second buffer.

With reference to the twelfth aspect, in some implementations of the twelfth aspect, in a possible implementation, the second RRC message is an uplink terminal device information response message.

With reference to the twelfth aspect, in some implementations of the twelfth aspect, the method further includes: The terminal device receives fourth indication information from the second network device, where the fourth indication information is used to indicate that the terminal device transmits a second measurement result through a second RLC entity, and the second RLC entity is different from a first RLC entity for transmitting the first measurement result.

According to the method for configuring MDT provided in this embodiment of this application, after receiving the fourth indication information of the second network device, the terminal device can change, based on the fourth indication information, an RLC entity for transmitting a measurement result.

According to a thirteenth aspect, a method for configuring MDT is provided. The method for configuring MDT may be performed by a second network device, or may be performed by a chip or a circuit used in the second network device. This is not limited in this application. For ease of description, the following uses an example in which the method is performed by the second network device for description.

The method for configuring MDT includes:
A second network device receives third indication information from a terminal device, where the third indication information is used to indicate a size of a first buffer buffer required for performing uplink data compression UDC based transmission on a first measurement result. The second network device configures, based on the third indication information, a second buffer required for UDC based transmission, where the first measurement result is a measurement result obtained by the terminal device by performing MDT measurement.

According to the method for configuring MDT provided in this embodiment of this application, the terminal device may send the third indication information to the second network device, where the third indication information indicates the size of the first buffer required for performing UDC based transmission on the first measurement result reported by the terminal device. In this way, the second network device may configure, with reference to the first buffer reported by the terminal device, a second buffer based on which UDC based transmission is performed on the first measurement result, to improve accuracy of the solution.

With reference to the thirteenth aspect, in some implementations of the thirteenth aspect, the method further includes: The second network device sends buffer configuration information to the terminal device, where the buffer configuration information is used to configure the second buffer. The second network device receives the first measurement result from the terminal device by using a second RRC message, where UDC processing is performed on the second RRC message.

Further, the second network device may configure the second buffer for the terminal device based on the size of the first buffer reported by the terminal device. The terminal device includes the first measurement result in the second RRC message, and UDC processing is performed on the second RRC message based on the second buffer.

With reference to the thirteenth aspect, in some implementations of the thirteenth aspect, in a possible implementation, the second RRC message is an uplink terminal device information response message.

With reference to the thirteenth aspect, in some implementations of the thirteenth aspect, the method further includes: The second network device sends fourth indication information to the terminal device, where the fourth indication information is used to indicate that the terminal device transmits a second MDT measurement result through a second RLC entity, the second RLC entity is different from a first RLC entity for transmitting the first MDT measurement result, and the second measurement result is a measurement result that needs to be reported after or before the first measurement result is reported.

According to the method for configuring MDT provided in this embodiment of this application, after receiving the fourth indication information of the second network device, the terminal device can change, based on the fourth indication information, an RLC entity for transmitting a measurement result.

According to a fourteenth aspect, an apparatus for configuring MDT is provided. The apparatus for configuring MDT includes a processor, configured to implement functions of the terminal device in the methods described in the first aspect, the fifth aspect, the ninth aspect, and the twelfth aspect.

Optionally, the apparatus for configuring MDT may further include a memory, the memory is coupled to the processor, and the processor is configured to implement functions of the terminal device in the methods described in the first aspect, the fifth aspect, the ninth aspect, and the twelfth aspect.

In a possible design, the memory is configured to store program instructions and data. The memory is coupled to the processor, and the processor may execute the program instructions stored in the memory, to implement functions of the terminal device in the methods described in the first aspect, the fifth aspect, the ninth aspect, and the twelfth aspect.

Optionally, the apparatus for configuring MDT may further include a communication interface, and the communication interface is used by the apparatus for configuring MDT to communicate with another device. When the apparatus for configuring MDT is a terminal device, the transceiver may be a communication interface or an input/output interface.

In a possible design, the apparatus for configuring MDT includes a processor and a communication interface, configured to implement functions of the terminal device in the methods described in the first aspect, the fifth aspect, the ninth aspect, and the twelfth aspect, and specifically including:
The processor communicates with an external device through the communication interface.

The processor is configured to run a computer program, so that the apparatus implements any method described in the first aspect, the fifth aspect, the ninth aspect, and the twelfth aspect.

It may be understood that the external device may be an object other than the processor, or an object other than the apparatus.

In another implementation, when the apparatus for configuring MDT is a chip or a chip system, the communication interface may be an input/output interface, an interface circuit, an output circuit, an input circuit, a pin, a related circuit, or the like in the chip or the chip system. The processor may alternatively be embodied as a processing circuit or a logic circuit.

According to a fifteenth aspect, an apparatus for configuring MDT is provided. The apparatus for configuring MDT includes a processor, configured to implement functions of the first network device in the methods described in the second aspect, the sixth aspect, and the tenth aspect.

Optionally, the apparatus for configuring MDT may further include a memory, the memory is coupled to the processor, and the processor is configured to implement functions of the first network device in the methods described in the second aspect, the sixth aspect, and the tenth aspect.

In a possible design, the memory is configured to store program instructions and data. The memory is coupled to the processor, and the processor may execute the program instructions stored in the memory, to implement functions of the first network device in the methods described in the second aspect, the sixth aspect, and the tenth aspect.

Optionally, the apparatus for configuring MDT may further include a communication interface, and the communication interface is used by the apparatus for configuring MDT to communicate with another device. When the apparatus for configuring MDT is a network device, the communication interface is a transceiver, an input/output interface, a circuit, or the like.

In a possible design, the apparatus for configuring MDT includes a processor and a communication interface, configured to implement functions of the first network device in the methods described in the second aspect, the sixth aspect, and the tenth aspect, and specifically including:
The processor communicates with an external device through the communication interface.

The processor is configured to execute a computer program, so that the apparatus implements any method described in the second aspect, the sixth aspect, and the tenth aspect.

It may be understood that the external device may be an object other than the processor, or an object other than the apparatus.

In another possible design, the apparatus for configuring MDT is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a sixteenth aspect, an apparatus for configuring MDT is provided. The apparatus for configuring MDT includes a processor, configured to implement functions of the second network device in the methods described in the third aspect, the seventh aspect, and the thirteenth aspect.

Optionally, the apparatus for configuring MDT may further include a memory, the memory is coupled to the processor, and the processor is configured to implement functions of the second network device in the methods described in the third aspect, the seventh aspect, and the thirteenth aspect.

In a possible design, the memory is configured to store program instructions and data. The memory is coupled to the processor, and the processor may execute the program instructions stored in the memory, to implement functions of the second network device in the methods described in the third aspect, the seventh aspect, and the thirteenth aspect.

Optionally, the apparatus for configuring MDT may further include a communication interface, and the communication interface is used by the apparatus for configuring MDT to communicate with another device. When the apparatus for configuring MDT is a network device, the communication interface is a transceiver, an input/output interface, a circuit, or the like.

In a possible design, the apparatus for configuring MDT includes a processor and a communication interface, configured to implement functions of the second network device in the methods described in the third aspect, the seventh aspect, and the thirteenth aspect, and specifically including:
The processor communicates with an external device through the communication interface.

The processor is configured to run a computer program, so that the apparatus implements any method described in the third aspect, the seventh aspect, and the thirteenth aspect.

It may be understood that the external device may be an object other than the processor, or an object other than the apparatus.

In another possible design, the apparatus for configuring MDT is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a seventeenth aspect, an apparatus for configuring MDT is provided. The apparatus for configuring MDT includes a processor, configured to implement functions of the core network device in the methods described in the fourth aspect and the eighth aspect.

Optionally, the apparatus for configuring MDT may further include a memory, the memory is coupled to the processor, and the processor is configured to implement functions of the core network device in the methods described in the fourth aspect and the eighth aspect.

In a possible design, the memory is configured to store program instructions and data. The memory is coupled to the processor, and the processor may execute the program instructions stored in the memory, to implement functions of the core network device in the methods described in the fourth aspect and the eighth aspect.

Optionally, the apparatus for configuring MDT may further include a communication interface, and the communication interface is used by the apparatus for configuring MDT to communicate with another device. When the apparatus for configuring MDT is a network device, the communication interface is a transceiver, an input/output interface, a circuit, or the like.

In a possible design, the apparatus for configuring MDT includes a processor and a communication interface, configured to implement functions of the core network device in the methods described in the fourth aspect and the eighth aspect, and specifically including:
The processor communicates with an external device through the communication interface.

The processor is configured to run a computer program, so that the apparatus implements any method described in the fourth aspect and the eighth aspect.

It may be understood that the external device may be an object other than the processor, or an object other than the apparatus.

In another possible design, the apparatus for configuring MDT is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to an eighteenth aspect, an apparatus for configuring MDT is provided. The apparatus for configuring MDT includes a processor, configured to implement functions of the third network device in the method described in the eleventh aspect.

Optionally, the apparatus for configuring MDT may further include a memory, the memory is coupled to the processor, and the processor is configured to implement functions of the third network device in the method described in the eleventh aspect.

In a possible design, the memory is configured to store program instructions and data. The memory is coupled to the processor, and the processor may execute the program instructions stored in the memory, to implement functions of the third network device in the method described in the eleventh aspect.

Optionally, the apparatus for configuring MDT may further include a communication interface, and the communication interface is used by the apparatus for configuring MDT to communicate with another device. When the apparatus for configuring MDT is a network device, the communication interface is a transceiver, an input/output interface, a circuit, or the like.

In a possible design, the apparatus for configuring MDT includes a processor and a communication interface, configured to implement functions of the third network device in the method described in the eleventh aspect, and specifically including:
The processor communicates with an external device through the communication interface.

The processor is configured to run a computer program, so that the apparatus implements any method described in the eleventh aspect.

It may be understood that the external device may be an object other than the processor, or an object other than the apparatus.

In another possible design, the apparatus for configuring MDT is a chip or a chip system. The communication interface may be an input/output interface, an interface circuit, an output circuit, an input circuit, a pin, a related circuit, or the like in the chip or the chip system. The processor may alternatively be embodied as a processing circuit or a logic circuit.

According to a nineteenth aspect, a computer-readable storage medium is provided. The computer-readable storage medium stores a computer program; and when the computer program is executed by a communication apparatus, the communication apparatus is enabled to implement the method in any one of the first aspect, the fifth aspect, the ninth aspect, the twelfth aspect, and the possible implementations of the first aspect, the fifth aspect, the ninth aspect, and the twelfth aspect.

According to a twentieth aspect, a computer-readable storage medium is provided. The computer-readable storage medium stores a computer program; and when the computer program is executed by a communication apparatus, the communication apparatus is enabled to implement the method in any one of the second aspect, the sixth aspect, the tenth aspect, and the possible implementations of the second aspect, the sixth aspect, and the tenth aspect.

According to a twenty-first aspect, a computer-readable storage medium is provided. The computer-readable storage medium stores a computer program; and when the computer program is executed by a communication apparatus, the communication apparatus is enabled to implement the method in any one of the third aspect, the seventh aspect, the thirteenth aspect, and the possible implementations of the third aspect, the seventh aspect, and the thirteenth aspect.

According to a twenty-second aspect, a computer-readable storage medium is provided. The computer-readable storage medium stores a computer program; and when the computer program is executed by a communication apparatus, the communication apparatus is enabled to implement the method in any one of the fourth aspect, the eighth aspect, and the possible implementations of the fourth aspect and the eighth aspect.

According to a twenty-third aspect, a computer-readable storage medium is provided. The computer-readable storage medium stores a computer program; and when the computer program is executed by a communication apparatus, the communication apparatus is enabled to implement the method in any one of the eleventh aspect and the possible implementations of the eleventh aspect.

According to a twenty-fourth aspect, a computer program product including instructions is provided. When the instructions are executed by a computer, a communication apparatus is enabled to implement the method in any one of the first aspect, the fifth aspect, the ninth aspect, the twelfth aspect, and the possible implementations of the first aspect, the fifth aspect, the ninth aspect, and the twelfth aspect.

According to a twenty-fifth aspect, a computer program product including instructions is provided. When the instructions are executed by a computer, a communication apparatus is enabled to implement the method in any one of the second aspect, the sixth aspect, the tenth aspect, and the possible implementations of the second aspect, the sixth aspect, and the tenth aspect.

According to a twenty-sixth aspect, a computer program product including instructions is provided. When the instructions are executed by a computer, a communication apparatus is enabled to implement the method in any one of the third aspect, the seventh aspect, the thirteenth aspect, and the possible implementations of the third aspect, the seventh aspect, and the thirteenth aspect.

According to a twenty-seventh aspect, a computer program product including instructions is provided. When the instructions are executed by a computer, a communication apparatus is enabled to implement the method in any one of the fourth aspect, the eighth aspect, and the possible implementations of the fourth aspect and the eighth aspect.

According to a twenty-eighth aspect, a computer program product including instructions is provided. When the instructions are executed by a computer, a communication apparatus is enabled to implement the method in any one of the eleventh aspect and the possible implementations of the eleventh aspect.

According to a twenty-ninth aspect, a communication system is provided, and includes the apparatus for configuring MDT described in the fourteenth aspect, the apparatus for configuring MDT described in the fifteenth aspect, the apparatus for configuring MDT described in the sixteenth aspect, the apparatus for configuring MDT described in the seventeenth aspect, and the apparatus for configuring MDT described in the eighteenth aspect.

### BRIEF DESCRIPTION OF DRAWINGS

FIG. 1 is a schematic diagram of a system 100 applicable to a method for configuring minimization of drive-tests MDT according to an embodiment of this application;
FIG. 2 is a schematic diagram of a communication system 200 applicable to a method for configuring minimization of drive-tests MDT according to an embodiment of this application;
FIG. 3 is an architectural diagram of a DC control plane according to an embodiment of this application;
FIG. 4 is a flowchart of configuring and reporting logged MDT according to an embodiment of this application;
FIG. 5 is a schematic diagram of uplink data compression according to an embodiment of this application;
FIG. 6 is a schematic flowchart of a method for configuring minimization of drive-tests MDT according to this application;
FIG. 7 is a schematic flowchart of another method for configuring minimization of drive-tests MDT according to this application;
FIG. 8 is a schematic flowchart of still another method for configuring minimization of drive-tests MDT according to this application;
FIG. 9 is a schematic flowchart of still another method for configuring minimization of drive-tests MDT according to this application;
FIG. 10 is a schematic diagram of an apparatus 1000 for configuring MDT according to this application;
FIG. 11 is a schematic diagram of a structure of a terminal device 1100 applicable to an embodiment of this application;
FIG. 12 is a schematic diagram of an apparatus 1200 for configuring MDT according to this application;
FIG. 13 is a schematic diagram of an apparatus 1300 for configuring MDT according to this application;
FIG. 14 is a schematic diagram of a structure of a network device 1400 applicable to an embodiment of this application;
FIG. 15 is a schematic diagram of an apparatus 1500 for configuring MDT according to this application; and
FIG. 16 is a schematic diagram of a structure of a core network device 1600 applicable to an embodiment of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5G system, and a new radio (new radio, NR) system. The technical solutions provided in this application may be further applied to a future communication system, for example, a 6^{th} generation mobile communication system. Alternatively, the communication system may be a public land mobile communication network (public land mobile network, PLMN), a device-to-device (device-to-device, D2D) communication system, a machine to machine (machine to machine, M2M) communication system, an internet of things (internet of things, IoT) communication system, or another communication system.

A terminal device (terminal device) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

By way of example but not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that is directly worn on a body or integrated into clothes or an accessory of a user. The wearable device is more than a hardware device, and implements powerful functions through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In addition, in embodiments of this application, the terminal device may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home NodeB (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system such as an NR system, one antenna panel or a group of antenna panels (including a plurality of antenna panels) of a base station in the 5G system, or a network node, for example, a baseband unit (BBU) or a distributed unit (distributed unit, DU), that constitutes the gNB or the transmission point.

In some deployments, the network device in embodiments of this application may be a central unit (central unit, CU) or a distributed unit (distributed unit, DU), or the network device includes the CU and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of an RRC layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes a service data adaptation protocol (service data adaptation protocol, SDAP) layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems, for example, a Linux operating system, a Unix operating system, an Android operating system, an iOS operating system, or a Windows operating system, that implement service processing by using a process (process). The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

The network device may be understood as an access network device, and the core network device is further involved in some embodiments of this application. Specifically, the core network device is a device in the core network (core network, CN) that provides service support for the terminal device. Currently, examples of some core network devices are: an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal device. The SMF entity may be responsible for session management, for example, session establishment of the terminal device. The UPF entity may be a functional entity on the user plane, and is mainly responsible for a connection to an external network. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity.

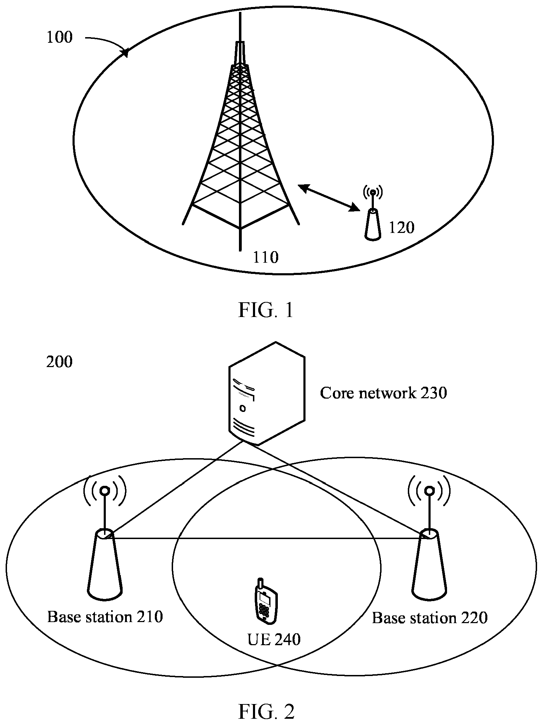

For ease of understanding embodiments of this application, a communication system shown in FIG. 1 is first used as an example to describe in detail the communication system applicable to embodiments of this application. FIG. 1 is a schematic diagram of a communication system 100 applicable to a method for configuring minimization of drive-tests MDT according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 over a radio link. A plurality of antennas may be configured for each communication device, for example, the network device 110 or the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

It should be understood that FIG. 1 is only a simplified schematic diagram of an example for ease of understanding. The communication system 100 may further include another network device or another terminal device, which is not shown in FIG. 1.

The method provided in this application may be further applied to a dual connectivity (dual connectivity, DC) scenario. For ease of understanding, the DC scenario is first described with reference to FIG. 2 by using an example in which the terminal device is UE and the network device is a base station.

In a wireless network, one UE may communicate with a plurality of base stations, that is, dual connectivity (dual connectivity, DC), which is also referred to as multi-radio dual connectivity (Multi-Radio dual connectivity, MR-DC). The plurality of base stations may be base stations of a same standard (for example, all are 4G base stations, or all are 5G base stations), or may be base stations of different standards (for example, one is a 4^{th} generation 4G base station, and another is a 5^{th} generation 5G base station).

For example, FIG. 2 is a schematic diagram of a communication system 200 applicable to a method for configuring minimization of drive-tests MDT according to an embodiment of this application. Refer to FIG. 2. UE 240 may communicate with a base station 210 and a base station 220 by using a DC technology, and the base station 210 and the base station 220 jointly access a core network 230. The core network 230 may be a 4G core network, or may be a 5G core network.

In a DC scenario, a base station that has control plane signaling interaction with the core network is referred to as a master node (master node, MN), and another base station is referred to as a secondary node (secondary node, SN). The MN is sometimes referred to as a master base station, and the SN is sometimes referred to as a secondary base station. Base stations have different RLC entities and MAC entities. In the DC scenario, a data radio bearer (data radio bearer, DRB) is classified into a master cell group bearer (master cell group bearer, MCG Bearer), a secondary cell group bearer (secondary cell group bearer, SCG Bearer), or a split bearer (split bearer). The MCG bearer means that an RLC entity and a MAC entity of the DRB are located only in the master base station. The SCG bearer means that an RLC entity and a MAC entity of the DRB are located only in the secondary base station. The split bearer means that an RLC entity and a MAC entity of the DRB are located in both the master base station and the secondary base station.

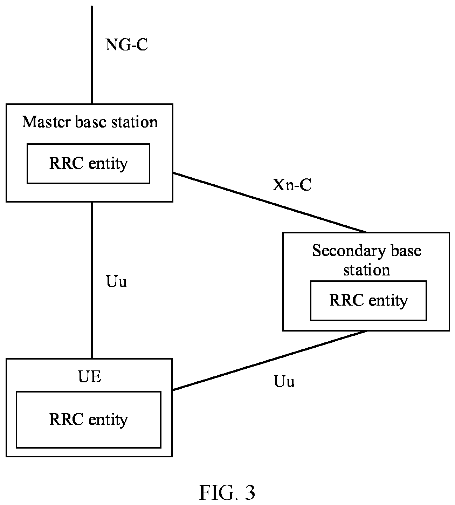

In addition, in dual connectivity, the master base station and the secondary base station each have the RRC entity, and may each generate an RRC message (namely, a control message, for example, a measurement message). FIG. 3 is an architectural diagram of a DC control plane according to an embodiment of this application. The master base station and the core network communicate with each other through a communication interface (for example, an NG-C interface), the master base station and the secondary base station communicate with each other through a communication interface (for example, an Xn-C interface), the master base station and the UE communicate with each other through a communication interface (for example, a Uu interface), and the secondary base station and the UE communicate with each other through the communication interface (for example, the Uu interface).

The secondary base station may directly send, to the UE, the RRC message generated by the secondary base station. In this case, the RRC message sent by the UE to the secondary base station is also directly sent to the secondary base station, and the RRC message between the secondary base station and the UE is referred to as a signaling radio bearer 3 (signaling radio bearer, SRB 3). Alternatively, the secondary base station may notify the master base station of the generated RRC message, and then the master base station sends the RRC message to the UE. In this case, the UE forwards, to the secondary base station via the master base station, the RRC message sent to the secondary base station.

Scenarios to which this application is applicable include but are not limited to the following DC types: evolved universal terrestrial radio access and new radio dual connectivity (E-UTRA-NR dual connectivity, EN-DC), next generation radio access network evolved universal terrestrial radio access and new radio dual connectivity (NG-RAN E-UTRA-NR dual connectivity, NGEN-DC), new radio and evolved universal terrestrial radio access dual connectivity (NR-E-UTRA dual connectivity, NE-DC), and new radio and new radio dual connectivity (NR-NR dual connectivity, NR-DC).

In the EN-DC, the master base station is an LTE base station (for example, an eNB) connected to a 4G core network, and the secondary base station is an NR base station (for example, a gNB).

In the NGEN-DC, the master base station is an LTE base station connected to a 5G core network, and the secondary base station is an NR base station.

In the NE-DC, the master base station is an NR base station connected to a 5G core network, and the secondary base station is an LTE base station.

In the NR-DC, the master base station is an NR base station connected to a 5G core network, and the secondary base station is an NR base station.

In DC, serving cells served by the secondary base station are referred to as a secondary cell group (secondary cell group, SCG), and the secondary cell group includes a primary secondary cell (primary SCG cell, PSCell) and one or more optional secondary cells. Cells served by the master base station are referred to as a master cell group (master cell group, MCG), and the master cell group includes a primary cell (primary cell, PCell) and one or more optional secondary cells.

The PCell is an MCG cell deployed at a primary frequency, and the UE performs an initial connection establishment process or a connection reestablishment process in the cell, or specifies the cell as the PCell in a handover process. The PSCell is a cell that is in an SCG cell and in which the UE performs random access when performing a synchronous reconfiguration process, or a cell in which the UE initiates initial physical uplink shared channel (physical uplink share channel, PUSCH) transmission when performing an SCG change and does not require a random access process. For detailed descriptions, refer to the protocols 3GPP TS 36.331 and 38.331.

It should be understood that the application scenario of this application is not limited to the foregoing DC scenario. This application is further applicable to a DC scenario of another system, for example, a DC scenario including a 5G base station and Wi-Fi, or a DC scenario including a base station deployed as a licensed spectrum and a base station deployed as an unlicensed spectrum

For ease of understanding embodiments of this application, several basic concepts in embodiments of this application are briefly described. It should be understood that basic concepts described below are briefly described by using a basic concept specified in a current protocol as an example, but embodiments of this application are not limited to being applied only to an existing communication system. Therefore, standard names appearing when the existing communication system is used as an example for description are all function descriptions, and a specific name is not limited.

### 1. MDT

A basic idea of an MDT technology is that an operator replaces some conventional drive test work with measurement reporting that is performed by a commercial terminal, to automatically collect measurement data of the terminal, to detect and optimize a problem and a fault in a wireless network. Application scenarios of the technology are as follows: An operator usually performs routine network coverage drive tests every month, and also performs call quality drive tests in specific areas to address user complaints. The MDT may be used to replace the drive tests in these scenarios. Measurement types of the existing MDT technology may be classified into the following types:
(1) Signal quality measurement: UE measures signal quality of a radio signal, and reports a measurement result to a base station or a base station controller.
(2) Quality of service (quality of service, QoS) measurement: Usually, a base station performs QoS measurement (for example, on a traffic volume of a service, a service throughput, and a service delay); UE performs measurement, for example, on an uplink processing delay; or a base station and UE perform joint processing, for example, air interface delay measurement.
(3) Accessibility measurement: UE records information about an RRC connection establishment failure, and reports the information to a base station or a base station controller.

### 2. Logged MDT and immediate MDT

The foregoing MDT may be classified into logged MDT (logged MDT) and immediate MDT (immediate MDT). The immediate MDT is MDT measurement performed by UE in an RRC connected (RRC-CONNECTED) state. The logged MDT is MDT measurement performed by UE in an idle (RRC-IDLE) state or an inactive (RRC INACTIVE) state (for example, MDT measurement performed by the UE on a cell on which the UE currently camps and some neighboring cells). The UE in the RRC-CONNECTED state means that an RRC connection is established between the UE and a base station, and the base station stores information about the UE (for example, one or more of context information of an access stratum and radio configuration information of the UE). The UE in the RRC-IDLE state means that there is no RRC connection between the UE and the base station, and the base station does not store the information about the UE. The UE in the RRC-INACTIVE state means that there is no RRC connection between the UE and the base station, and the base station stores the information about the UE.

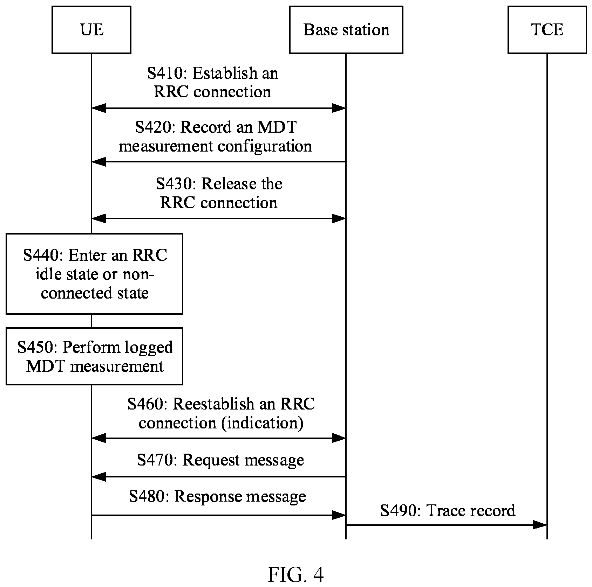

The immediate MDT is usually used to measure one or more of a data volume, a network throughput rate, a packet transmission delay, a packet loss rate, a processing delay, or the like of the UE, and the logged MDT usually refers to measurement performed by the UE on strength of a received signal. The following briefly describes a procedure of configuring and reporting logged MDT with reference to FIG. 4. FIG. 4 is a flowchart of configuring and reporting logged MDT according to an embodiment of this application. The procedure shown in FIG. 4 includes the following steps.

S410: Establish an RRC connection between UE and a base station.

S420: The base station sends a logged MDT measurement configuration to the UE.

For the logged MDT, after the UE accesses the base station and enters an RRC_CONNECTED state or before the UE enters an idle state or an inactive state, the base station notifies, by using an RRC message, the UE of the corresponding logged MDT measurement configuration. Usually, the logged MDT measurement configuration carries a timer length. After receiving the logged MDT measurement configuration information, the UE can learn of the timer length, and after receiving the configuration information, the UE starts a timer corresponding to the length. Alternatively, when the UE starts to perform logged MDT measurement after entering the idle state or the inactive state, the UE starts a timer corresponding to the length. When the timer expires, the UE stops the logged MDT measurement. The UE deletes a previously stored logged MDT measurement result a period of time (for example, 48 hours) after the timer expires.

For example, the logged MDT measurement configuration includes one or more of the following information: a trace reference (trace reference) (including an operator identifier PLMN identity and a trace identifier trace id), a trace recording session reference (trace recording session reference), and a trace collection entity identifier (trace collection entity id). The trace reference is used to identify a trace session and is globally unique. The trace recording session reference is used to identify a trace recording session in a trace session. The trace session is a time segment, where a start point is activation time of the trace session, and an end point is deactivation time of the trace session. A trace record is collected trace data. The trace recording session refers to an interval at which trace records are generated in a trace session. For specific meanings of the trace reference, the trace session, the trace record, the trace recording session, and the trace recording session reference in this application, refer to definitions in an existing 3GPP protocol (for example, 3GPP TS 32.422). Details are not described herein.

A correspondence between an IP address of a trace collection entity and the trace collection entity identifier is configured on a network side. The base station includes the trace reference, the trace recording session reference, and the trace collection entity identifier in the MDT configuration to be delivered to the UE. Subsequently, when reporting a measurement result, the UE also includes the trace reference, the trace recording session reference, and the trace collection entity identifier in the measurement result. In this way, the base station knows, based on the correspondence, to send the measurement result to a corresponding trace control entity (trace control entity, TCE). For details, refer to descriptions in 3GPP protocols 32.421 and 32.422.

For management based MDT, a network management system or operation, administration and maintenance (operation, administration and maintenance, OAM) entity or an element management (element management, EM) entity configures a trace reference and a trace collection entity identifier when delivering an MDT command to a base station. After the base station selects UE to perform MDT measurement, the base station allocates a trace recording session reference to the UE. The OAM entity may be referred to as OAM for short, and the EM entity may be referred to as EM for short.

Then, the logged MDT configuration information sent by the base station to the UE carries the trace reference, the trace recording session reference, and the trace collection entity identifier. In other words, only the base station that configures logged MDT for the UE knows UE to which a corresponding trace recording session reference is allocated, and a base station and a TCE that receive the reported measurement result may not know, based on the trace reference and the trace recording session reference that are reported by the UE, that the UE reporting the measurement result is the UE for which the trace recording session reference is previously configured.

For signaling based MDT, each trace reference of a trace session of the UE has only one trace recording session reference. A core network sends an MDT configuration of the UE to the base station by using interface signaling, corresponding to the UE, between the core network and the base station, where the corresponding configuration includes a trace reference, a trace recording session reference, and a trace collection entity identifier. In this way, the TCE knows, based on the trace reference and/or the trace recording session reference reported by the UE and the trace reference and/or the trace recording session reference previously configured by the core network for the UE, UE corresponding to the measurement result.

The steps performed by the TCE are described above with respect to the signaling based MDT and the management based MDT. Differences between the signaling based MDT and the management based MDT are described below, and are not further described herein.

S430: Release the RRC connection between the UE and the base station.

S440: The UE enters the RRC_IDLE or INACTIVE state.

S450: The UE performs logged MDT measurement.

After the UE returns to the RRC_IDLE or INACTIVE state, the UE performs logged MDT measurement, and records a corresponding measurement result.

S460: Reestablish an RRC connection between the UE and the base station.

When the UE subsequently reenters the RRC_CONNECTED state from the RRC_IDLE or INACTIVE state, the UE includes an indication in the RRC message to be sent to the base station, to indicate that the current UE has a logged MDT measurement result.

S470: The base station sends a request message to the UE.

After the base station receives the indication in the RRC message, the base station may send the request message to the UE, where the request message is used to request the UE to report the logged MDT measurement result.

S480: The UE sends a response message to the base station.

After receiving the request message, the UE may send the response message to the base station, where the response message carries the corresponding logged MDT measurement result.

S490: The base station sends a trace record to the trace control entity (Trace control entity, TCE).

After performing logged MDT measurement, the UE reports the logged MDT measurement result to the base station, and the base station sends an MDT report to the TCE based on an IP address of the TCE, to complete a drive test. A procedure performed after the base station obtains the logged MDT measurement result is not limited in this application. For details, refer to a stipulation in a current protocol, or refer to a stipulation in a future protocol. Details are not described herein.

Only the messages shown in FIG. 4 are briefly described above. For specific meanings of these messages and content included in these messages, refer to an existing protocol.

It should be noted that the base station that delivers the logged MDT measurement configuration to the UE and the base station to which the UE reports the logged MDT measurement result may be different base stations.

### 3. Signaling based MDT and management based MDT

The foregoing logged MDT may be further classified into signaling based MDT (signaling based MDT) and management based MDT (management based MDT). Similarly, the foregoing immediate MDT may also be classified into signaling based MDT and management based MDT. For ease of differentiation, in this application, the signaling based MDT corresponding to the logged MDT is denoted as signaling based logged MDT, the management based MDT corresponding to the logged MDT is denoted as management based logged MDT, the signaling based MDT corresponding to the immediate MDT is denoted as signaling based immediate MDT, and the management based MDT corresponding to the immediate MDT is denoted as management based immediate MDT.

From a perspective of configuring MDT by a core network, the signaling based MDT is MDT for UE, and the management based MDT is not MDT for specific UE. In the signaling based MDT, the core network sends an MDT configuration of the UE to a base station by using interface signaling, corresponding to the UE, between the core network and the base station. In the management based MDT, a network management system directly sends configuration information to the base station, and the base station selects, based on the configuration information, a UE capability, and the like, UE to perform MDT measurement.

In the conventional technology, it is mentioned that a priority of the signaling based MDT is higher than a priority of the management based MDT. In other words, management based MDT cannot overwrite signaling based MDT previously configured by a network device for the terminal device. However, in the conventional technology, how to ensure that the management based MDT does not overwrite the previous signaling based MDT is not mentioned.

For the logged MDT, if the UE currently has no logged MDT measurement result, the UE does not send, to the base station, indication information indicating that the UE currently has a logged MDT measurement result, and the base station does not know whether the logged MDT is previously configured for the UE. Even if the UE additionally reports indication information indicating whether the logged MDT configuration expires, the base station does not know whether the previous logged MDT configuration is a management based MDT configuration or a signaling based MDT configuration. Therefore, the network device cannot ensure that the management based MDT cannot overwrite the previous signaling based MDT.

### 4. Uplink data compression (uplink data compression, UDC) technology

The uplink data compression technology is introduced into the R15 protocol. A core idea of the technology is to reduce a volume of transmitted data by compressing a data packet sent in uplink, to obtain one or more benefits of rate improvement, coverage enhancement, delay reduction, and the like. A main idea of UDC is to use a correlation between adjacent data packets to compress repeated content of the adjacent data packets at a transmit end, transmit only different parts of the adjacent data packets, supplement the repeated content at a receive end, and obtain the original data packets through decompression.

In UDC in an LTE scenario, UE functions as a transmit end to compress uplink data, and a base station functions as a receive end to decompress the uplink data. Compression and decompression are based on a compression buffer (buffer) jointly maintained by the UE and the base station. The buffer in this application may also be referred to as a cache area. The buffer is similar to a dictionary. Compression is to find a part that is repeated with the dictionary from a to-be-transmitted data packet and use the part as redundant information. Decompression is to find compressed repeated content from the dictionary, and then fill back the compressed repeated content to resume the original data packet. The buffer includes a buffer header and a buffer tail, and a buffer size is space that can be used to store characters and that is between the buffer header and the buffer tail.

A basic principle of compression is as follows: When a character string that is the same as a current character string is found in the buffer, the current character string is replaced with 2-tuple (length, distance), where "length" indicates a length of a character string matched during sliding, and "distance" indicates a distance between the current character string and a character of the matched character string in a sliding window. In addition, characters that do not match the current character string in the buffer are all defined as "literal", that is, original characters are retained. Then, "literal", "length", and "distance" may be encoded through Huffman encoding for further compression. Compressed content is sent to the receive end.

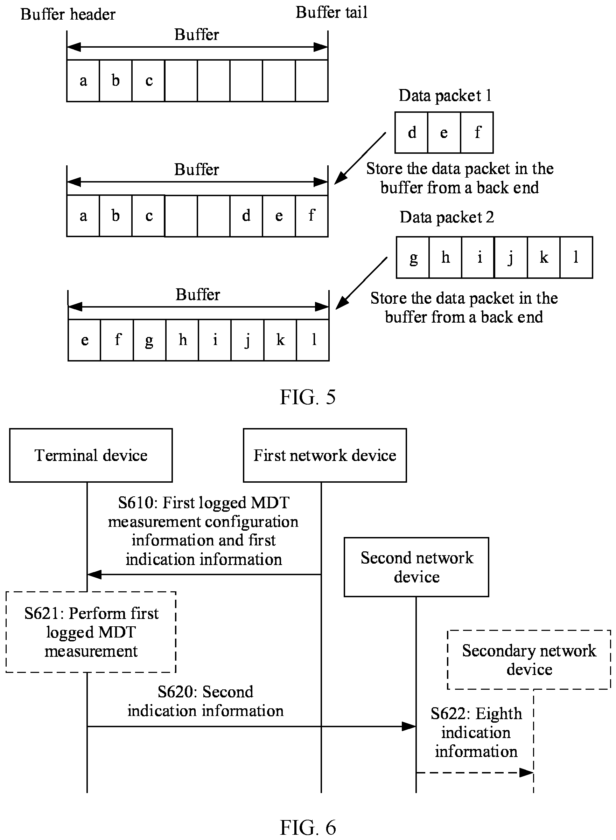

After the compression succeeds, the UE sequentially places, into the buffer from the buffer tail of the buffer in a first in first out manner, data packets that are not compressed into currently compressed data packets. FIG. 5 is a schematic diagram of uplink data compression according to an embodiment of this application.

For example, an initial character string in a buffer maintained by the transmit end is abc. After a data packet (packet) 1 (where as shown in FIG. 5, the packet 1 includes a character string def) is compressed based on abc, the transmit end sequentially places, from the buffer tail of the buffer in the first in first out manner, the character string in the packet 1 into the buffer maintained by the transmit end (where as shown in FIG. 5, the character string in the buffer changes to abcdef).

For the receive end, before the packet 1 is received, an initial character string in a buffer maintained by the receive end is also abc. After receiving a compressed packet of the packet 1, the receive end decompresses the compressed packet based on the initial character string in the buffer to obtain a character string def included in the packet 1. Then, the receive end stores, from back to front, decompressed data in the buffer maintained by the receive end (where as shown in FIG. 5, the character string in the buffer changes to abcdef), so that the character strings in the buffers separately maintained by the transmit end and the receive end are unified.

As shown in FIG. 5, a compression and decompression procedure for a packet 2 (where as shown in FIG. 5, the packet 2 includes a character string ghijkl) is similar to that for the packet 1. After compressing the packet 2, the transmit end sequentially places, from the buffer tail of the buffer in the first in first out manner, the packet 2 into the buffer maintained by the transmit end. Because the size of the buffer is fixed, the characters placed later squeeze the characters placed earlier out of the buffer, where the character string included in the buffer is used as a "dictionary". For a specific procedure, refer to the process of adding the packet 2 to the buffer in FIG. 5. Details are not described herein again.

In addition, the following descriptions are provided to facilitate understanding of embodiments of this application.

First, in this application, "being used to indicate" may include "being used to directly indicate" and "being used to indirectly indicate". When a piece of indication information is described as being used to indicate A, the indication information may be used to directly indicate A or used to indirectly indicate A, but it does not necessarily mean that the indication information includes A.

If information indicated by the indication information is referred to as to-be-indicated information, in a specific implementation process, there are many manners of indicating the to-be-indicated information. For example, but not limited to, the to-be-indicated information may be directly indicated, for example, the to-be-indicated information or an index of the to-be-indicated information. The to-be-indicated information may alternatively be indirectly indicated by indicating other information, where there is an association relationship between the other information and the to-be-indicated information. Alternatively, only a part of the to-be-indicated information may be indicated, and another part of the to-be-indicated information is known or agreed on in advance. For example, specific information may alternatively be indicated by using an arrangement sequence of a plurality of pieces of information that is pre-agreed on (for example, specified in a protocol), to reduce indication overheads to some extent. In addition, a common part of all pieces of information may be further identified and indicated in a unified manner, to reduce indication overheads caused by separately indicating same information.

Second, "first", "second", and various numerical numbers (for example, "#1" and "#2") in this application are merely used to distinguish between objects for ease of description, but are not intended to limit the scope of embodiments of this application. For example, the various numerical numbers are used to distinguish between different messages, and distinguish between different access network devices.

Third, in this application, "preset" may include "indicated by a network device by using signaling" or "predefined", for example, "defined in a protocol". Herein, "predefined" may be implemented in a manner in which corresponding code, a table, or other related indication information is pre-stored in a device (for example, including a terminal device and a network device). A specific implementation thereof is not limited in this application.

Fourth, "storage" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form, and this is not limited in this application.

Fifth, a "protocol" in embodiments of this application may be a standard protocol in the communication field, for example, may include an LTE protocol, an NR protocol, and a related protocol applied to a future communication system. This is not limited in this application.

With reference to FIG. 1 and FIG. 2, the foregoing briefly describes a scenario to which the method for configuring minimization of drive-tests MDT provided in embodiments of this application can be applied, and describes basic concepts that may be used in embodiments of this application. The following describes in detail the method for configuring minimization of drive-tests MDT provided in embodiments of this application with reference to the accompanying drawings.

It should be understood that the method for configuring minimization of drive-tests MDT provided in embodiments of this application may be applied to the communication system 100 shown in FIG. 1 and the communication system 200 shown in FIG. 2. The communication system may include at least one network device and at least one terminal device. The network device and the terminal device may communicate with each other by using an antenna technology.

It should be further understand that, a specific structure of an execution body of the method provided in embodiments of this application is not specifically limited in the following embodiments, provided that a program that records code of the method provided in embodiments of this application can be run to perform communication according to the method provided in embodiments of this application. For example, the method provided in embodiments of this application may be performed by the terminal device, the network device, or a functional module that can execute a program in the terminal device or the network device.

It can be learned from the foregoing descriptions of the signaling based MDT and the management based MDT that, in the conventional technology, it is proposed that it should be ensured that management based MDT does not overwrite signaling based MDT previously configured by the network device for the terminal device. However, no specific execution solution is provided in the conventional technology. This application provides a method for configuring minimization of drive-tests MDT, which can increase a possibility that the management based MDT does not overwrite the previous signaling based MDT.

In addition, it can be learned from the foregoing UDC technology that, in an LTE scenario, a network device side determines and configures a size of a buffer (for example, the buffer may be any one of 2k, 4k, or 8k), and the buffer is at a DRB level. If a configuration size of the buffer needs to be changed, the configuration size can be changed only in a handover manner (for example, the network device delivers a handover command to the terminal device, or the network device delivers, to the terminal device, a reconfiguration message for synchronization). If one or more of the following cases are used to change the buffer: a DRB needs to change from being configured with UDC to not being configured with UDC, or change from not being configured with UDC to being configured with UDC, or a size of a buffer corresponding to a DRB changes, for example, from 2k to 4k, the buffer can be changed only in the handover manner or a reconfiguration manner.

For the logged MDT, the terminal device may store at least 64K records, and report a maximum of 8K records each time. In this way, the terminal device may need to perform transmission by using a plurality of RRC messages to report logged MDT measurement results, and each RRC message carries a large logged MDT measurement result. The logged MDT measurement result is transmitted by using an SRB 2. In addition to transmitting the logged MDT measurement result, the SRB 2 further carries a NAS message. The NAS message is a message sent by the terminal device to a core network device. This application further provides a method for configuring minimization of drive-tests MDT, so that compressed transmission can be performed on the logged MDT measurement result.

Without loss of generality, the following describes in detail, by using interaction between the network device and the terminal device as an example, the method for configuring minimization of drive-tests MDT provided in embodiments of this application.

FIG. 6 is a schematic flowchart of a method for configuring minimization of drive-tests MDT according to this application. The method may be performed by a first network device, a second network device, and a terminal device.

An application scenario of this embodiment includes: When the terminal device is in an RRC_CONNECTED state, the first network device configures MDT for the terminal device. The terminal device enters an RRC_IDLE state or an RRC_INACTIVE state at a moment after the first network device configures the MDT (using logged MDT as an example for description in this embodiment) for the terminal device. Then, the terminal device enters the RRC_CONNECTED state again and establishes an RRC connection to the second network device. The second network device may be a network device that is the same as the first network device, or may be a network device different from the first network device.

It should be understood that the logged MDT is MDT measurement performed by the terminal device in the idle (RRC-IDLE) state or the inactive (RRC_INACTIVE) state. In a scenario in which a terminal device switches from the RRC-CONNECTED state to the RRC-IDLE state or the RRC_INACTIVE state and then switches to the RRC-CONNECTED state again, in this embodiment of this application, management based logged MDT configured by a network device side for the terminal device can be prevented from overwritting signaling based logged MDT previously configured for the terminal device.

The method for configuring minimization of drive-tests MDT includes at least some of the following steps.

S610: The first network device sends first logged MDT measurement configuration information and first indication information to the terminal device.

The first logged MDT measurement configuration information is used to configure first logged MDT for the terminal device, and the first logged MDT measurement configuration information includes configuration information required by the terminal device to perform first logged MDT measurement. The first indication information is used to indicate a type of the first logged MDT configured by the first network device for the terminal device.

For example, the first indication information indicates that the first logged MDT is signaling based logged MDT (signaling based logged MDT), indicates that the first logged MDT is management based logged MDT (management based logged MDT), indicates that the first logged MDT is not signaling based logged MDT, or indicates that the first logged MDT is not management based logged MDT.

In a possible implementation, that the first network device sends first logged MDT measurement configuration information and first indication information to the terminal device may be sending the first logged MDT measurement configuration information and the first indication information to the terminal device by using one message. For example, both the first logged MDT measurement configuration information and the first indication information are carried in a first configuration message.

For example, the first configuration message in this embodiment may reuse a message, in an existing protocol, for transmitting the first logged MDT measurement configuration information when the first network device configures the first logged MDT for the terminal device. A difference is that the message for transmitting the first logged MDT measurement configuration information further carries the first indication information, or it may be understood that the first indication information is a part of content in the first logged MDT measurement configuration information.

A difference between the configuring, by the first network device, the first logged MDT for the terminal device in this embodiment and configuring, by a network device, first logged MDT for a terminal device in the conventional technology is as follows: In addition to configuring, for the terminal device by using the first configuration message, a measurement configuration related to the first logged MDT, the first network device further includes the first indication information in the first configuration message, and indicates the type of the first logged MDT by using the first indication information.

For example, for the signaling based logged MDT, the first network device indicates, by using the first indication information, that a measurement configuration of the currently configured first logged MDT is a measurement configuration corresponding to the signaling based logged MDT. For the management based logged MDT, the first network device indicates, by using the first indication information, that a measurement configuration of the currently configured first logged MDT is a measurement configuration corresponding to the management based logged MDT.

For example, the first configuration message in this embodiment may reuse other existing signaling between the first network device and the terminal device, and the existing signaling carries the first logged MDT measurement configuration information and the first indication information.

For example, the first configuration message in this embodiment may be a piece of newly added signaling between the first network device and the terminal device, and is used to carry the first logged MDT measurement configuration information and the first indication information.

It should be understood that a specific form of the first configuration message is not limited in this embodiment. From a perspective of reducing signaling overheads, the existing message for transmitting the first logged MDT measurement configuration information may be reused, provided that the first indication information is added to the message for transmitting the first logged MDT measurement configuration information.

In another possible implementation, that the first network device sends first logged MDT measurement configuration information and first indication information to the terminal device may be sending the first logged MDT measurement configuration information and the first indication information to the terminal device by using two messages. For example, the first logged MDT measurement configuration information is sent to the terminal device based on an existing procedure of configuring the first logged MDT, and the first indication information may be carried in another message and sent to the terminal device.

Optionally, the message carrying the first indication information may reuse the existing signaling between the first network device and the terminal device. Alternatively, the message carrying the first indication information may be a piece of newly added signaling between the first network device and the terminal device.

It should be noted that a specific type of the first indication information is not limited in this embodiment of this application. For example, the first indication information may be of an enumerated type, indicating whether the first logged MDT is signaling based logged MDT or management based logged MDT. Alternatively, the first indication information may be of a Boolean variable type, indicating whether the first logged MDT is signaling based logged MDT, or indicating whether the logged MDT is management based logged MDT.

For example, the first indication information may be 1-bit binary information. For example, when a bit value is 1, it indicates that the first logged MDT is signaling based logged MDT; when a bit value is 0, it indicates that the first logged MDT is management based logged MDT. For another example, when a bit value is 0, it indicates that the first logged MDT is signaling based logged MDT; when a bit value is 1, it indicates that the first logged MDT is management based logged MDT.

For example, the first indication information may be 2-bit binary information. For example, the 1^{st} bit indicates whether the first logged MDT is signaling based logged MDT, and the 2^{nd} bit indicates whether the first logged MDT is management based logged MDT. When a value of the 1^{st} bit is 1, it indicates that the first logged MDT is signaling based logged MDT; when a value of the 1^{st} bit is 0, it indicates that the first logged MDT is not signaling based logged MDT. When a value of the 2^{nd} bit is 1, it indicates that the first logged MDT is management based logged MDT; when a value of the 2^{nd} bit is 0, it indicates that the first logged MDT is not management based logged MDT.

The specific form of the first indication information is merely an example, and does not constitute any limitation on the protection scope of this application. Other first indication information that can be used to indicate that the type of the first logged MDT is signaling based logged MDT or management based logged MDT also falls within the protection scope of this application.

It should be understood that this embodiment mainly relates to how to ensure that the management based logged MDT does not overwrite the signaling based logged MDT previously configured by the network device for the terminal device. A configuration specifically included in the measurement configuration corresponding to the first logged MDT is not limited. For example, the measurement configuration corresponding to the first logged MDT may include a measurement configuration such as a measurement information range and an event that triggers the UE to perform logged MDT. Specifically, for the measurement configuration corresponding to the first logged MDT, refer to a stipulation in an existing protocol, or refer to a stipulation in a future protocol. Details are not described herein.

Further, in this embodiment, after receiving the first indication information, the terminal device can learn whether the type of the current first logged MDT is management based logged MDT or signaling based logged MDT.

In this embodiment, after receiving the first configuration information, the terminal device switches from the RRC_CONNECTED state to the RRC_IDLE state or the RRC_INACTIVE state. It should be understood that a specific moment at which the terminal device switches from the RRC_CONNECTED state to the RRC_IDLE state or the RRC INACTIVE state is not limited in this embodiment of this application, and may be any moment after the first configuration information is received.

The terminal device in the RRC_IDLE state or the RRC_INACTIVE state may perform first logged MDT measurement based on the first logged MDT measurement configuration information, and record a corresponding logged MDT measurement result. In other words, the method procedure shown in FIG. 6 may further include S621: The terminal device performs logged MDT measurement.

It should be noted that, that the terminal device definitely performs logged MDT measurement based on the first logged MDT measurement configuration information and obtains the logged MDT measurement result is not limited in this embodiment. Whether the terminal device performs logged MDT measurement after receiving the first logged MDT measurement configuration information is not limited in this embodiment.

Further, in this embodiment, the terminal device switches from the RRC_IDLE state or the RRC_INACTIVE state back to the RRC_CONNECTED state (for example, establishes a connection to the second network device).

In a possible implementation, in this embodiment of this application, the terminal device learns of the type of the currently configured first logged MDT. In this case, after switching from the RRC_IDLE state or the RRC_INACTIVE state back to the RRC_CONNECTED state and establishing the connection to the second network device, the terminal device may reject logged MDT, with a low-priority type, reconfigured by the second network device for the terminal device. Optionally, if a timer of the first logged MDT has not expired, or a first logged MDT measurement result has not been deleted or discarded, or the terminal device still has a first logged MDT measurement result, or a first logged MDT measurement result has not been uploaded to a network side, the terminal device may reject the logged MDT, with the low priority, reconfigured by the second network device for the terminal device.

For example, the terminal device receives the first indication information, and learns that the type of the first logged MDT configured by the first network device for the terminal device is signaling based logged MDT. In this case, after the terminal device establishes the connection to the second network device, if the terminal device receives the management based logged MDT configured by the second network device, the terminal device may reject configuration information of the second network device, and still perform logged MDT measurement based on the first logged MDT measurement configuration information.

In another possible implementation, in this embodiment of this application, after the terminal device switches from the RRC_IDLE state or the RRC INACTIVE state back to the RRC_CONNECTED state and establishes the connection to the second network device, different from the conventional technology in which after a terminal device reenters an RRC_CONNECTED state, the terminal device reports a logged MDT measurement result and seventh indication information used to indicate whether first logged MDT measurement configuration information expires, in this embodiment, after the terminal device reenters the RRC_CONNECTED state, the terminal device may send second indication information to the second network device, where the second indication information is used to indicate the type of the first logged MDT configured by the first network device for the terminal device. In other words, the method procedure shown in FIG. 6 further includes S620: The terminal device sends the second indication information to the second network device.

In a possible implementation, that the terminal device sends the second indication information to the second network device may be: The terminal device includes the second indication information in a first RRC message to be sent to the second network device.

Specifically, when reentering the RRC_CONNECTED state, the terminal device may include the second indication information in the first RRC message. The first RRC message includes any one of the following messages:
an RRC reconfiguration complete (RRC Reconfiguration Complete) message, an RRC reestablishment complete (RRC reestablishment Complete) message, or an RRC resume complete (RRC resume Complete) message. RRC reconfiguration complete message: The terminal device triggers RRC connection reconfiguration when the second network device needs to initiate one or more of operations such as SRB and DRB management and underlying parameter configuration after the terminal device establishes the RRC connection to the second network device; the second network device sends the configuration information to the terminal device by using an RRC connection reconfiguration message, and the terminal device reports, by using the RRC reconfiguration complete message, acknowledgement of RRC connection reconfiguration complete. RRC reestablishment complete message: In an RRC reestablishment process triggered when a radio link failure, an integrity protection failure, an RRC reconfiguration failure, or the like occurs after the terminal device establishes the RRC connection to the second network device, the terminal device sends the RRC reestablishment complete message to the second network device to report that RRC reestablishment is completed. RRC resume complete message: When the terminal device resumes from the RRC_INACTIVE state, the terminal device initiates a resume request message (for example, an RRC resume request RRC Resume request) on the second network device, and after the second network device sends a response to the terminal device, the terminal device sends the RRC resume complete message to the second network device to report that RRC connection resume is completed. In another possible implementation, if the terminal device performs S621, that the terminal device sends the second indication information to the second network device may be: The terminal device further includes the second indication information in a message that is to be sent to the second network device and that carries the logged MDT measurement result.

Specifically, after reentering the RRC_CONNECTED state, the terminal device may include the logged MDT measurement result and the second indication information in an uplink terminal device information response message to be reported to the second network device. The uplink terminal device information response message may be a response message sent by the terminal device to the second network device after the terminal device receives a request that is sent by the second network device to the terminal device and that is for reporting the logged MDT measurement result. The response message is used to report the logged MDT measurement result. Different from an uplink terminal device information response message in the conventional technology, the uplink terminal device information response message in this embodiment of this application carries not only the logged MDT measurement result but also the second indication information.

Optionally, in this implementation, when a timer corresponding to the first logged MDT measurement configuration information expires and/or the first logged MDT measurement result has been deleted or discarded, the second indication information does not need to be carried in the reported first logged MDT measurement result. It may be understood that, when the timer corresponding to the first logged MDT measurement configuration information expires and/or the first logged MDT measurement result has been deleted or discarded, the second network device may reconfigure MDT for the terminal device, and a case in which the management based logged MDT overwrites the signaling based logged MDT does not occur. In this application, a case in which the management based logged MDT may overwrite the signaling based logged MDT is mainly considered. A case in which the management based logged MDT does not overwrite the signaling based logged MDT is not described in detail.

In still another possible implementation, the second indication information may be a piece of newly added signaling between the terminal device and the second network device after the terminal device reenters the RRC_CONNECTED state.

Optionally, in this embodiment, the terminal device may further report whether a fourth network device having another radio access technology (radio access technology, RAT) configures third logged MDT configuration information for the terminal device. For example, the terminal device reports, to the second network device, a RAT type of the fourth network device that configures the third logged MDT configuration information for the terminal device. Optionally, in this embodiment, the terminal device may further report a type of third logged MDT corresponding to another RAT.

It should be noted that the second network device and the first network device may be a same network device or different network devices.

When this embodiment is applied to the scenario shown in FIG. 2, the terminal device may send the second indication information to the SN (for example, the terminal device includes the second indication information in an RRC message to be sent to the SN, or the terminal device sends the second indication information to the SN by using an SRB 3).

Alternatively, the terminal device may send the second indication information to the MN, and then the MN sends the second indication information to the SN (for example, the terminal device encapsulates, into an RRC message to be sent by the terminal device to the MN, an RRC message that needs to be sent to the SN). Specifically, when the MN receives the second indication information sent by the terminal device, the MN may include the second indication information in an SN addition message or an SN modification message, and send the message to the SN. It may be understood that when this embodiment is applied to the scenario shown in FIG. 2, the second network device may be the MN or the SN. When the second network device is the MN, the MN may send eighth indication information to the SN, where the eighth indication information is used to indicate the type of the first logged MDT. In this case, the method procedure shown in FIG. 6 further includes S622: The second network device sends the eighth indication information to a secondary network device. In this embodiment, after S622 is performed and after the secondary network device learns of a type of logged MDT previously configured by the first network device for the terminal device, the secondary network device may consider priorities of the management based MDT and the signaling based MDT when subsequently configuring logged MDT for the terminal device. This can ensure that the management based logged MDT does not overwrite the signaling based logged MDT that has been previously configured by the network device for the terminal device.

In this embodiment, after S620 is performed and after the second network device learns of the type of logged MDT previously configured by the first network device for the terminal device, the second network device may consider the priorities of the management based MDT and the signaling based MDT when subsequently configuring logged MDT for the terminal device. This can ensure that the management based logged MDT does not overwrite the signaling based logged MDT that has been previously configured by the network device for the terminal device.

For example, when the first network device has previously configured the signaling based logged MDT for the terminal device, the second network device does not configure the management based logged MDT for the terminal device, so that the management based MDT is prevented from overwritting the signaling based MDT previously configured by the network device for the terminal device.

The method for configuring MDT shown in FIG. 6 is mainly described by using an example in which first MDT configured by the first network device for the terminal device is logged MDT. However, that the method is not applicable to a case in which the first MDT configured by the first network device for the terminal device is immediate MDT is not limited. The method for configuring MDT shown in FIG. 6 may be further applied to a case in which when the terminal device is in the RRC_CONNECTED state, the first network device configures the immediate MDT for the terminal device, and the terminal device remains in the RRC_CONNECTED state. In this case, the second network device shown in FIG. 6 may be a network device that is the same as the first network device, or the second network device is an added or changed SN in the scenario in FIG. 2, or the second network device is a target network device to which the terminal device is handed over from the first network device.

In the method for configuring MDT shown in FIG. 6, when the first MDT configured by the first network device for the terminal device is the immediate MDT, the method includes the following steps.

Step 1: The first network device sends first immediate MDT measurement configuration information and first indication information to the terminal device.

The first immediate MDT measurement configuration information is used to configure first immediate MDT for the terminal device, and the first immediate MDT measurement configuration information includes configuration information required by the terminal device to perform first immediate MDT measurement. The first indication information is used to indicate a type of the first immediate MDT configured by the first network device for the terminal device, for example, signaling based or management based immediate MDT. Different from the first indication information in S610, the first indication information is used to indicate a type of immediate MDT. A specific delivery manner and a possible message type of the first indication information, and how the first indication information indicates the type of the immediate MDT in step 1 may be the same as those of the first indication information in S610, and details are not described herein again.

Step 2: The terminal device sends second indication information to the second network device.

The second indication information is used to indicate the type of the first immediate MDT configured by the first network device for the terminal device. Different from the second indication information in S620, the second indication information is used to indicate the type of the immediate MDT. A specific reporting manner of the second indication information and how the second indication information indicates the type of the immediate MDT in step 2 may be the same as those of the second indication information in S620, and details are not described herein again. A message type (a message for transmitting the second indication information) corresponding to the second indication information in step 2 may be the same as or different from that corresponding to the second indication information in S620. For example, the second indication information in step 2 is carried in a measurement report (MeasurementReport) message.

For example, the method further includes step 3: The terminal device performs immediate MDT measurement, and obtains an immediate MDT measurement result.

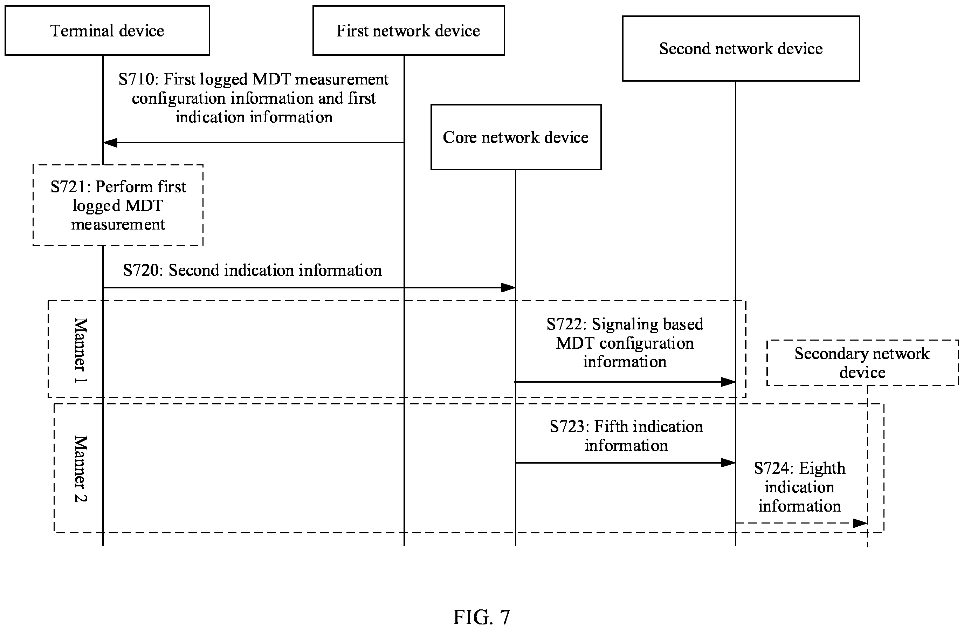

FIG. 7 is a schematic flowchart of another method for configuring minimization of drive-tests MDT according to this application. The method may be performed by a first network device, a second network device, and a terminal device.

An application scenario of this embodiment includes: When the terminal device is in an RRC_CONNECTED state, the first network device configures MDT for the terminal device. The terminal device enters an RRC_IDLE state or an RRC_INACTIVE state at a moment after the first network device configures the MDT (using logged MDT as an example for description in this embodiment) for the terminal device. Then, the terminal device enters the RRC_CONNECTED state again and establishes an RRC connection to the second network device. The second network device may be a network device that is the same as the first network device, or may be a network device different from the first network device.

The method for configuring minimization of drive-tests MDT includes at least some of the following steps.

S710: The first network device sends first logged MDT measurement configuration information and first indication information to the terminal device.

S710 is similar to S610 shown in FIG. 6, and details are not described herein again.

Optionally, FIG. 7 further includes S721: The terminal device performs logged MDT measurement. S721 is similar to S621 shown in FIG. 6, and details are not described herein again.

Further, in this embodiment, the terminal device switches from the RRC_IDLE state or the RRC_INACTIVE state back to the RRC_CONNECTED state. Different from the conventional technology in which after a terminal device reenters an RRC_CONNECTED state, the terminal device simultaneously reports a logged MDT measurement result and seventh indication information used to indicate whether first logged MDT measurement configuration information expires, in this embodiment, after the terminal device reenters the RRC_CONNECTED state, the terminal device sends second indication information to a core network device, where the second indication information is used to indicate a type of first logged MDT. In other words, the method procedure shown in FIG. 7 may further include S720: The terminal device sends the second indication information to the core network device.

In a possible implementation, that the terminal device sends the second indication information to the core network device may be: The terminal device includes the second indication information in an initial context to be sent to the core network device.

In another possible implementation, that the terminal device sends the second indication information to the core network device may be: The terminal device includes the second indication information in a non-access stratum (non-access stratum, NAS) message to be sent to the core network device.

Further, after receiving the second indication information, the core network device can learn of the type of the first logged MDT. In this embodiment, after the core network device learns of the type of the first logged MDT configured by the first network device for the terminal device, subsequent execution steps include the following two possible manners:

### Manner 1:

The core network device may send signaling based MDT configuration information to the second network device based on the second indication information, where the signaling based MDT configuration information is used to indicate the second network device to configure second logged MDT of a signaling based logged MDT type for the terminal device. In other words, the method procedure shown in FIG. 7 may further include S722: The core network device sends the signaling based MDT configuration information to the second network device. After S722 is performed, when the second network device subsequently configures the second logged MDT for the terminal device, it can be ensured that management based logged MDT does not overwrite signaling based logged MDT that has been previously configured for the terminal device.

For example, when the type of the first logged MDT that has been configured for the terminal device is management based MDT, the core network device may send signaling based logged MDT configuration information to the second network device. When the type of the first logged MDT that has been configured for the terminal device is signaling based logged MDT, the core network device may send new signaling based logged MDT configuration information to the second network device.

### Manner 2:

The core network device may send fifth indication information to the second network device, where the fifth indication information is used to indicate the type of the first logged MDT. In other words, the method procedure shown in FIG. 7 may further include S723: The core network device sends the fifth indication information to the second network device. After S723 is performed and after the second network device learns of the type of the first logged MDT previously configured by the first network device for the terminal device, the second network device may consider priorities of the management based MDT and the signaling based MDT when subsequently configuring second logged MDT for the terminal device. This can ensure that management based logged MDT does not overwrite signaling based logged MDT that has been previously configured for the terminal device.

When this embodiment is applied to the scenario shown in FIG. 2, the core network device may send the fifth indication information to the MN, and then the MN sends eighth indication information to the SN. The eighth indication information is used to indicate the type of the first logged MDT. Specifically, when the MN receives the fifth indication information sent by the core network device, the MN may include the eighth indication information in an SN addition message or an SN modification message, and send the message to the SN. In this case, the method procedure shown in FIG. 7 further includes S724: The second network device sends the eighth indication information to a secondary network device.

The method for configuring MDT shown in FIG. 7 is mainly described by using an example in which first MDT configured by the first network device for the terminal device is logged MDT. However, that the method is not applicable to a case in which the first MDT configured by the first network device for the terminal device is immediate MDT is not limited. The method for configuring MDT shown in FIG. 7 may be further applied to a case in which when the terminal device is in the RRC_CONNECTED state, the first network device configures the immediate MDT for the terminal device, and the terminal device remains in the RRC_CONNECTED state. In this case, the second network device shown in FIG. 7 may be a network device that is the same as the first network device, or the second network device is an added or changed SN in the scenario in FIG. 2, or the second network device is a target network device to which the terminal device is handed over from the first network device.

In the method for configuring MDT shown in FIG. 7, when the first MDT configured by the first network device for the terminal device is the immediate MDT, the method includes the following steps.

Step 1: The first network device sends first immediate MDT measurement configuration information and first indication information to the terminal device.

The first immediate MDT measurement configuration information is used to configure first immediate MDT for the terminal device, and the first immediate MDT measurement configuration information includes configuration information required by the terminal device to perform first immediate MDT measurement. The first indication information is used to indicate a type of the first immediate MDT configured by the first network device for the terminal device, for example, signaling based or management based immediate MDT. Different from the first indication information in S610, the first indication information is used to indicate a type of immediate MDT. A specific delivery manner and a possible message type (a message for transmitting the second indication information) of the first indication information, and how the second indication information indicates the type of the immediate MDT in step 1 may be the same as those of the first indication information in S610, and details are not described herein again.

Step 2: The terminal device sends the second indication information to the core network device.

The second indication information is used to indicate the type of the first immediate MDT configured by the first network device for the terminal device. Different from the second indication information in S720, the second indication information is used to indicate the type of the immediate MDT. A specific reporting manner and a possible message type of the second indication information, and how the second indication information indicates the type of the immediate MDT in step 2 may be the same as those of the second indication information in S720, and details are not described herein again.

Step 3: The core network device sends signaling based MDT configuration information to the second network device; and/or
the core network device sends fifth indication information to the second network device, where the fifth indication information is used to indicate the type of the first immediate MDT. A specific sending manner and a possible message type of the fifth indication information, and how the fifth indication information indicates the type of the immediate MDT in step 3 may be the same as those of the fifth indication information in S722, and details are not described herein again.

For example, the method further includes step 4: The terminal device performs immediate MDT measurement, and obtains an immediate MDT measurement result.

The embodiments shown in FIG. 6 and FIG. 7 mainly relate to how to ensure that the management based MDT does not overwrite the previous signaling based MDT.

Further, in the conventional technology, when the terminal device performs handover between network devices (for example, a serving network device of the terminal device changes from a source network device to a target network device), or when SN addition or an SN change occurs in the DC scenario shown in FIG. 2 (for example, the SN in the DC scenario shown in FIG. 2 changes from an SN #1 to an SN #2, or a quantity of SNs in the DC scenario shown in FIG. 2 increases from 1 to 2), the target network device or the newly added or changed SN does not know whether MDT is previously configured for the terminal device and does not know a type of the MDT configured for the terminal device. The target network device or the newly added or changed SN may configure the management based MDT for the terminal device. Consequently, the management based MDT overwrites the configured signaling based MDT.

In addition, for immediate MDT measurement, if the target network device or the newly added or changed SN redelivers immediate an MDT measurement configuration to the terminal device, immediate MDT measurement restarts. For example, for delay measurement that the source network device or the MN indicates the terminal device to perform, if the target network device or the newly added or changed SN redelivers the measurement configuration to the terminal device, the terminal device may discard measurement results of some previous data packets. Consequently, delays of some data packets are not measured.

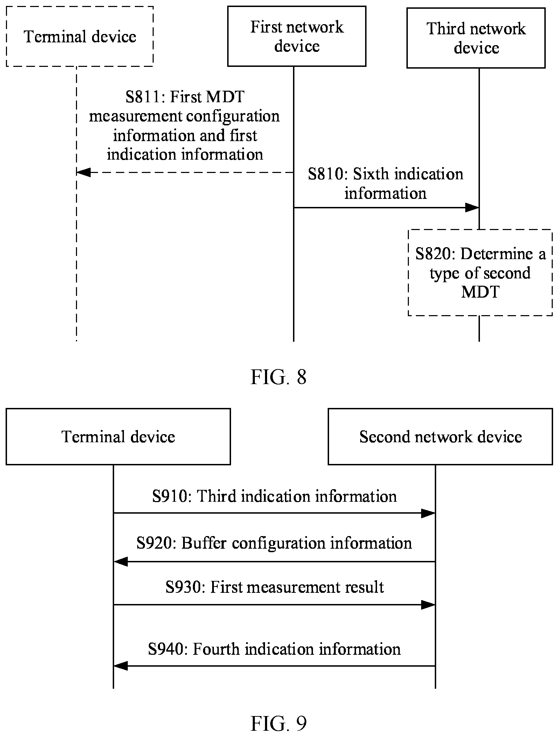

Therefore, this application further provides a method for configuring minimization of drive-tests MDT. When network device handover or a network device change occurs, a conflict between MDT configuration information reconfigured by the target network device or the newly added or changed SN and MDT configuration information that has been configured for the terminal device can be avoided. For ease of description, in an embodiment shown in FIG. 8, the MDT configuration information reconfigured by the target network device or the newly added or changed SN for the terminal device is denoted as second MDT configuration information, and the MDT configuration information that has been configured by the source network device or the MN for the terminal device is denoted as first MDT configuration information.

FIG. 8 is a schematic flowchart of still another method for configuring minimization of drive-tests MDT according to this application. The method may be performed by a first network device and a third network device.

An application scenario of this embodiment includes: When a terminal device is in an RRC_CONNECTED state, the first network device configures first MDT configuration information for the terminal device. At a moment after the first network device configures the first MDT configuration information for the terminal device, a serving network device of the terminal device changes from the first network device to the third network device, or an SN is added or changed in the scenario in FIG. 2. The added or changed SN may also be referred to as the third network device. In the foregoing process in which the serving network device changes from the first network device to the third network device, the terminal device is in the RRC_CONNECTED state; or in the process in which the SN is added or changed in the scenario in FIG. 2, the terminal device is in the RRC_CONNECTED state.

The method for configuring minimization of drive-tests MDT includes at least some of the following steps.

S810: The first network device sends sixth indication information to the third network device.

The sixth indication information is used to indicate that the first network device configures signaling based MDT for the terminal device. In this embodiment, the first network device may be understood as the foregoing source network device or MN

In the handover process, the first network device (the source network device or the MN) sends the sixth indication information to the third network device (a target base station device or the added or changed SN), where the sixth indication information indicates one of the following content:
indicating whether the first network device configures signaling based logged MDT for the terminal device, indicating a type of logged MDT configured by the first network device for the terminal device, indicating whether the first network device configures signaling based immediate MDT for the terminal device, and indicating a type (for example, one or more of uplink or downlink delay measurement and uplink or downlink throughput measurement) of a measurement metric in signaling based immediate MDT configured by the first network device for the terminal device.

It should be noted that, in this embodiment shown in FIG. 8, a case in which second MDT measurement configuration information configured by the third network device for the terminal device is a low-priority MDT configuration (for example, management based logged MDT), and overwrites high-priority first MDT measurement configuration information (for example, signaling based logged MDT) configured by the first network device for the terminal device may be avoided. To resolve the problem in this case, when the first network device configures the signaling based MDT for the terminal device, the first network device sends the sixth indication information to the third network device.

In this embodiment shown in FIG. 8, a case in which the second MDT measurement configuration information configured by the third network device for the terminal device causes restart of immediate MDT measurement can be avoided. To resolve the problem in this case, when the first network device configures, for the terminal device, immediate MDT corresponding to a preset measurement metric, the first network device sends the sixth indication information to the third network device, to indicate the preset measurement metric corresponding to the immediate MDT configured by the first network device, so that when configuring the second MDT measurement configuration information, the third network device does not configure the immediate MDT that corresponds to the preset measurement metric and that has been configured by the first network device. The preset measurement metric herein may be one or more of uplink or downlink delay measurement, uplink or downlink throughput measurement, and the like.

For example, when the first network device configures, for the terminal device, immediate MDT corresponding to uplink delay measurement, the terminal device performs uplink delay measurement based on the immediate MDT configuration corresponding to the uplink delay measurement. After a period of time of measurement, network device handover occurs. If the third network device does not know that the first network device configures, for the terminal device, the immediate MDT corresponding to uplink delay measurement, the third network device may reconfigure, for the terminal device, the immediate MDT corresponding to uplink delay measurement, and the terminal device discards some uplink delay measurement results (for example, a delay of a data packet #1) previously obtained through measurement. Consequently, some delays are not measured. However, in this embodiment shown in FIG. 8 of this application, because the third network device has known that the first network device configures, for the terminal device, the immediate MDT corresponding to uplink delay measurement, the third network device does not need to reconfigure, for the terminal device, the immediate MDT corresponding to uplink delay measurement, and the terminal device continues to complete uplink delay measurement based on the previously configured immediate MDT corresponding to uplink delay measurement.

Based on the foregoing uplink delay measurement solution, further, this application provides a solution in which the terminal device provides uplink delay measurement result distribution. The solution includes:

The first network device configures a plurality of delay thresholds for the terminal. The terminal device performs periodic measurement and reporting, measures a delay of a data packet in each measurement periodicity, and calculates a ratio of data packets whose delay values each exceed each of the plurality of delay thresholds in the measurement periodicity. The calculating the ratio of the data packets whose delay values each exceed a delay threshold in the measurement periodicity includes: calculating a ratio of a quantity of data packets whose delays each exceed the delay threshold in the measurement periodicity to a total quantity of data packets in the measurement periodicity.

The terminal device sends, to the first network device based on a reporting periodicity (which is the same as the measurement periodicity), the ratio that is calculated in each measurement periodicity and that is of data packets whose delay values each exceed each of the plurality of delay thresholds.

The first network device receives a ratio of data packets whose delay values each exceed each of the plurality of delay thresholds in one measurement periodicity, and the first network device may obtain delay distribution through measurement (for example, ratio distribution of data packets in each delay range) in the measurement periodicity. For ease of understanding, the following uses a specific example to describe the solution in which the terminal device provides uplink delay measurement result distribution.

For example, thresholds delivered by the first network device to the terminal device are Thred1, Thred2, and Thred3. The terminal device separately reports a ratio Ratio1 of data packets whose corresponding delays each exceed Thred1, a ratio Ratio2 of data packets whose corresponding delays each exceed Thred2, and a ratio Ratio3 of data packets whose corresponding delays each exceed Thred3 in each measurement periodicity. In this way, the first network device may obtain, based on these reported ratios, a ratio 1-Ratio1 of data packets whose delays each are less than Thred1, a ratio Ratio2-Ratio1 of data packets whose delays each are between Thred1 and Thred2, a ratio Ratio3-Ratio2 of data packets whose delays each are between Thred2 and Thred3, and the ratio Ratio3 of data packets whose delays each exceed Thred3 in the measurement periodicity. Optionally, when the terminal device reports the ratios of data packets whose delays exceed the thresholds, there is a specific binding relationship between a sequence of the ratios of data packets whose delays exceed the thresholds in information reported by the terminal and a sequence of a plurality of thresholds configured by the first network device. For example, the sequences are the same (for example, if a sequence of configured delay thresholds is Thred1/Thred2/Thred3, a sequence of reporting ratios is Ratio1/Ratio2/Ratio3).

Based on the foregoing uplink delay measurement solution, further, this application provides another solution in which the terminal device provides uplink delay measurement result distribution. The solution includes:

The first network device configures a plurality of delay thresholds for the terminal. The terminal device performs periodic measurement and reporting, measures a delay of a data packet in each measurement periodicity, calculates a ratio of the delay of the data packet to every two adjacent delay thresholds of the plurality of delay thresholds in the measurement periodicity, calculates a ratio of data packets whose delay values each do not exceed a smallest delay threshold of the plurality of delay thresholds in the measurement periodicity, and calculates a ratio of data packets whose delay values each exceed a largest delay threshold of the plurality of delay thresholds in the measurement periodicity.

The calculating a ratio of the delay value of the data packet to every two adjacent delay thresholds of the plurality of delay thresholds in the measurement periodicity includes: calculating a ratio of a quantity of data packets whose delays each exceed (are greater than) a smaller delay threshold of the two adjacent delay thresholds and do not exceed (are less than or equal to) a larger delay threshold of the two adjacent delay thresholds in the measurement periodicity to a total quantity of data packets in the measurement periodicity.

The calculating a ratio of data packets whose delay values each do not exceed a smallest delay threshold of the plurality of delay thresholds in the measurement periodicity includes: calculating a ratio of a quantity of data packets whose delays each do not exceed the smallest delay threshold of the plurality of delay thresholds in the measurement periodicity to the total quantity of data packets in the measurement periodicity.

The calculating a ratio of data packets whose delay values each exceed a largest delay threshold of the plurality of delay thresholds in the measurement periodicity includes: calculating a ratio of a quantity of data packets whose delays each exceed the largest delay threshold of the plurality of delay thresholds in the measurement periodicity to the total quantity of data packets in the measurement periodicity.

The terminal device sends, to the first network device based on a reporting periodicity (which is the same as the measurement periodicity), the ratio that is calculated in each measurement periodicity.

The first network device may obtain delay distribution through measurement (for example, ratio distribution of data packets in each delay range) in the measurement periodicity based on the received ratio. For ease of understanding, the following uses a specific example to describe the solution in which the terminal device provides uplink delay measurement result distribution.

For example, thresholds delivered by the first network device to the terminal device are Thred1, Thred2, and Thred3. The terminal device separately reports a ratio Ratio1 of data packets whose corresponding delays each do not exceed Thred1, a ratio Ratio2 of data packets whose corresponding delays each exceed Thred1 but do not exceed Thred2, a ratio Ratio3 of data packets whose corresponding delays each exceed Thred2 but do not exceed Thred3, and a ratio Ratio4 of data packets whose corresponding delays each exceed Thred3 in each measurement periodicity. In this way, the first network device may obtain, based on these reported ratios, the ratio Ratio 1 of data packets whose delays each are less than Thred1, the ratio Ratio2 of data packets whose delays each are between Thred1 and Thred2, the ratio Ratio3 of data packets whose delays each are between Thred2 and Thred3, and the ratio Ratio4 of data packets whose delays each exceed Thred3 in the measurement periodicity.

Optionally, the foregoing uplink delay may be a delay from time when a PDCP entity or an SDAP entity of the terminal device receives an uplink data packet to time when the terminal device obtains, from a network side, an uplink grant for transmitting the data packet or the terminal device starts to send the data packet to the network side.

Further, after learning of the sixth indication information, the third network device can determine, based on the sixth indication information, to configure MDT configuration information for the terminal device. In other words, the method procedure shown in FIG. 8 further includes S820: The third network device determines a type of second MDT, where the type of the second MDT does not conflict with the type of the first MDT configured by the first network device for the terminal device.

For example, if the first network device has configured the signaling based logged MDT for the UE, the third network device cannot configure the management based logged MDT for the UE, and may reconfigure signaling based logged MDT for the UE.

Alternatively, if the first network device has configured, for the terminal device, signaling based immediate MDT corresponding to the preset metric, the third network device cannot configure, for the terminal device, management based immediate MDT corresponding to the preset measurement metric.

In this embodiment, after S820 is performed and after the third network device learns of a type of MDT or a measurement metric that is previously configured by the first network device for the terminal device, the third network device considers priorities of management based MDT and signaling based MDT when subsequently configuring MDT for the terminal device. This can ensure that the management based logged MDT does not overwrite the signaling based logged MDT that has been previously configured for the terminal device.

Optionally, after learning of the type of the MDT or the measurement metric that is previously configured by the first network device for the terminal device, the third network device may further send the sixth indication information to another network device (for example, when the terminal device is subsequently handed over from the third network device to another network device).

This application further provides a method for configuring minimization of drive-tests MDT, so that compressed transmission can be performed by using a logged MDT measurement result to be transmitted by using UDC. The following describes in detail the method for configuring minimization of drive-tests MDT with reference to FIG. 9.

FIG. 9 is a schematic flowchart of still another method for configuring minimization of drive-tests MDT according to this application. The method may be performed by a second network device and a terminal device.

An application scenario of this embodiment includes: The terminal device performs MDT measurement based on configured MDT measurement configuration information, to obtain an MDT measurement result. In this embodiment, the terminal device needs to report the MDT measurement result to the second network device by using a UDC technology.

The method for configuring minimization of drive-tests MDT includes at least some of the following steps.

S910: The terminal device sends third indication information to the second network device.

The third indication information is used to indicate a size of a first buffer buffer required for performing UDC based transmission on a first measurement result. The first measurement result includes the MDT measurement result that the terminal device currently needs to report. Optionally, MDT measurement refers to logged MDT measurement.

For example, as shown in FIG. 4, the terminal device reports, to the second network device by including ninth indication information in an RRC connection reestablishment message, that the terminal device currently has a first measurement result and may send the first measurement result to the second network device. Different from the procedure shown in FIG. 4, in this embodiment, the terminal device further includes the foregoing third indication information in the RRC connection reestablishment message.

For example, the terminal device includes the third indication information in an RRC reconfiguration complete message, an RRC reestablishment complete message, or an RRC resume complete message to be sent to the second network device. In this case, the third indication information in this embodiment and the second indication information in the embodiment shown in FIG. 6 may be carried in a same message and reported to the second network device. It should be noted that in this embodiment of this application, that the second indication information in the embodiment shown in FIG. 6 and the third indication information in the embodiment shown in FIG. 9 are carried in a same message is not limited, and the information may be carried in different messages and reported to the second network device.

It should be noted that the second network device in the embodiment shown in FIG. 9 and the second network device in the embodiment shown in FIG. 6 or FIG. 7 may be a same network device. In addition, the second network device in the embodiment shown in FIG. 9 and the first network device in the embodiment shown in FIG. 6 or FIG. 7 may alternatively be a same network device. In this embodiment of this application, that the second network device is a network device to which the terminal device establishes a connection is not limited, and the second network device is understood as a network device to which the terminal device reports the MDT measurement result.

The third indication information is used to indicate an SRB 2 or the size of the first buffer required for performing UDC based transmission on the first measurement result, where the SRB 2 is used to transmit the first measurement result; and/or the third indication information is used to indicate whether UDC needs to be performed when the terminal device sends the first measurement result to the second network device. When the second network device receives the third indication information, it is determined that UDC needs to be performed when the terminal device sends the first measurement result to the second network device.

It should be understood that, in this embodiment of this application, the terminal device may alternatively indicate, by using two pieces of indication information, the SRB 2 or the size of the first buffer required for performing UDC based transmission on the first measurement result, and whether UDC needs to be performed when the terminal device sends the first measurement result to the second network device. Details are not described herein.

The SRB 2 is a signaling radio bearer that is established by the terminal device by using the SRB 1 transmission signaling after the terminal device enters an RRC connected state and that is used to transmit NAS and logged measurement information. The SRB 1 is used to transmit an RRC message, and is used to transmit a NAS message before the SRB 2 is established.

S920: The second network device sends buffer configuration information to the terminal device.

The buffer configuration information is used to configure a second buffer. Optionally, the buffer configuration information is determined based on the size of the first buffer buffer. It may be understood that after receiving the third indication information, the second network device can learn of the size of the first buffer required for transmitting the first measurement result based on UDC and learn that the terminal device supports UDC based transmission of the first measurement result. Therefore, the second network device may configure, with reference to the size of the first buffer, the second buffer based on which UDC based transmission is performed on the first measurement result. Alternatively, after receiving the third indication information, the second network device can learn that the terminal device supports UDC based transmission of the first measurement result and expects to transmit the first measurement result based on UDC, so that the second network device configures UDC based transmission on the first measurement result.

Optionally, the second network device may include, in a request message (for example, UE information request), the buffer configuration information and/or information indicating to perform UDC based transmission on the first measurement result.

S930: The terminal device sends the first measurement result to the second network device.

In a possible implementation, the terminal device reports the first measurement result in a second RRC message, and UDC processing is performed on the second RRC message carrying the first measurement result. In other words, the terminal device performs UDC processing on the entire second RRC message to be sent to the second network device.

In another possible implementation, the terminal device reports the first measurement result in the second RRC message, and the terminal device includes, in the second RRC message, content obtained after the first measurement result is compressed. In other words, the terminal device performs UDC processing on the first measurement result to be sent to the second network device.

The second RRC message includes an uplink terminal device information response message (for example, S480 shown in FIG. 4).

Optionally, the second RRC message may further carry a size of a third buffer that is recommended by the terminal device for reporting a second measurement result next time. Similar to S920, after learning of the size of the third buffer, the second network device may configure a fourth buffer for the terminal device based on the third buffer, to transmit the second measurement result. Details are not described herein again.

Optionally, the second RRC message may further carry whether UDC needs to be performed on the second measurement result that is reported next time, where this case is recommended by the terminal device. Similar to S920, the second network device learns that the terminal device supports UDC based transmission of the measurement result and expects to transmit the measurement result based on UDC, so that the second network device configures UDC based transmission on the measurement result. Details are not described herein again.

The first measurement result and the second measurement result are MDT measurement results that need to be reported by the terminal device at different moments. It should be understood that the terminal device performs periodic MDT measurement based on the configured MDT measurement configuration information, and MDT measurement results that need to be reported by the terminal device at different moments may be the same or may be different.

For example, when the terminal device performs periodic MDT measurement based on the configured MDT measurement configuration information, to obtain a measurement result (where the measurement result includes the first measurement result and the second measurement result) through measurement in a periodicity #1, the terminal device first reports the first measurement result included in the measurement result, and reports the second measurement result included in the measurement result next time after reporting the first measurement result. Alternatively, when the terminal device performs periodic MDT measurement based on the configured MDT measurement configuration information, to obtain the first measurement result through measurement in a periodicity #1, the terminal device reports the first measurement result. The terminal device obtains the second measurement result through measurement in a periodicity #2, and then the terminal device reports the second measurement result.

For example, when the second network device needs to change a buffer used for performing UDC based transmission on the measurement result (for example, the second buffer corresponding to UDC based transmission on the first measurement result is different from a fourth buffer corresponding to UDC based transmission on the first measurement result; or the second network device determines that UDC based transmission is not performed on the second measurement result, that is, a fourth buffer does not need to be configured; or another case in which the second network device needs to change a buffer configuration, where examples are not described herein one by one), the second network device may send fourth indication information to the terminal device. In other words, the method procedure shown in FIG. 9 further includes S940: The second network device sends the fourth indication information to the terminal device. The fourth indication information is used to indicate that the terminal device transmits the second measurement result through a second RLC entity, and the second RLC entity is different from a first RLC entity for transmitting the first measurement result.

In a possible implementation, the fourth indication information is used to indicate the terminal device to release an RLC entity that corresponds to a logical channel identifier and that is for transmitting the first measurement result, and add an RLC entity that corresponds to a logical channel identifier and that is for transmitting the second measurement result.

Alternatively, in another possible implementation, the fourth indication information is used to indicate the terminal device to change an RLC entity that corresponds to a logical channel identifier and that is for transmitting a measurement result. For example, RLC entities corresponding to two logical channel identifiers are configured for both the second network device and the terminal device. The first RLC entity corresponding to a first logical channel identifier transmits the first measurement result on which UDC processing is performed based on the second buffer, and the second RLC entity corresponding to a second logical channel identifier transmits the second measurement result on which UDC processing is performed based on the fourth buffer. For one radio bearer, protocol layers through which a data packet passes include an RRC layer (only for an SRB), a PDCP layer, an RLC layer, a MAC layer, and a PHY layer. Usually, on a network device side and a terminal device side, one radio bearer corresponds to one PDCP entity. Usually, for a transparent mode (transparent mode, TM) and an unacknowledged mode (unacknowledged mode) in RLC, one logical channel corresponds to one RLC entity. For an acknowledged mode (acknowledged mode, AM) in RLC, one logical channel corresponds to two RLC entities. One is an RLC entity on a transmit side, and the other is an RLC entity on a receive side.

In a DC scenario, for a split bearer, one radio bearer corresponds to two RLC entities (one is on a master node, and the other is on a secondary node). On the network device side, usually, for one terminal device, one network device has one MAC entity (unless a carrier aggregation-based PDCP replication function is used for a radio bearer, and in this case, one network device has two MAC entities for the terminal device). On the terminal device side, usually, for one network device, one terminal device has one MAC entity (unless a carrier aggregation-based PDCP replication function is used for a radio bearer, and in this case, the terminal device side has two MAC entities for one network device).

Further, after receiving the fourth information, the terminal device may perform corresponding processing.

For example, if the second network device notifies the terminal device to release the first RLC entity corresponding to the first logical channel identifier and add the second RLC entity corresponding to the second logical channel identifier, the terminal device deletes and adds the RLC entities (deletes the first RLC entity and adds the second RLC entity), processes data by using a new UDC configuration (the fourth buffer), and sends the processed data to the second network device through a second logical channel.

For another example, if RLC entities corresponding to two logical channel identifiers are configured for both the second network device and the terminal device, data processed by using an old UDC configuration (the second buffer) continues to be sent to the second network device through a first logical channel, and data processed by using a new UDC configuration (the fourth buffer) is sent to the second network device through a second logical channel. For example, after the data is processed by using the old UDC configuration, the terminal device sends end indication information to the second network device in the old first logical channel, to indicate that the terminal device has completed sending of uplink data in the first logical channel. The end indication information may be generated at the PDCP layer of the terminal device, or generated at the RLC layer of the terminal device.

It should be noted that, in the embodiment shown in FIG. 9, an example in which the SRB 2 is transmitted by using the UDC technology (where the SRB 2 is used to transmit the MDT measurement result) is mainly used to describe how to perform compressed transmission on the SRB 2. However, in this embodiment of this application, the solution shown in FIG. 9 is not limited to being used only for compressed transmission of the SRB 2, and the DRB may also be transmitted in this compression manner. A specific procedure is the same as that of compressed transmission of the SRB 2 shown in FIG. 9, except that an object to be compressed is the DRB instead of the SRB 2. Details are not described herein again.

Further, the foregoing solution in which the second network device changes, by using the fourth information, the buffer used for performing UDC based transmission on the measurement result is not limited to being performed based on S910 to S930. The solution of changing the buffer used for performing UDC based transmission on the measurement result (for example, changing a size configuration of the buffer, or changing from being configured with UDC based transmission to not being configured with UDC based transmission, or changing from not being configured with UDC based transmission to being configured with UDC based transmission, or another case in which the network device needs to change a buffer configuration, where examples are not described herein one by one) may be further combined with an existing procedure of transmitting an SRB and/or a DRB by the terminal device to the network device. For example, if UDC based transmission is used in the existing procedure of transmitting the SRB and/or the DRB, the network device may also change, by using the foregoing solution of changing the buffer used for performing UDC based transmission on the measurement result, a UDC configuration for transmitting the SRB and/or the DRB. A specific change manner is similar to that shown in S940, and details are not described herein again.

It should be understood that the terminal device and/or the network device in the foregoing method embodiments may perform some or all of the steps in this embodiment. These steps or operations are merely examples. In embodiments of this application, other operations or variants of the various operations may further be included.

It should be further understood that, in embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

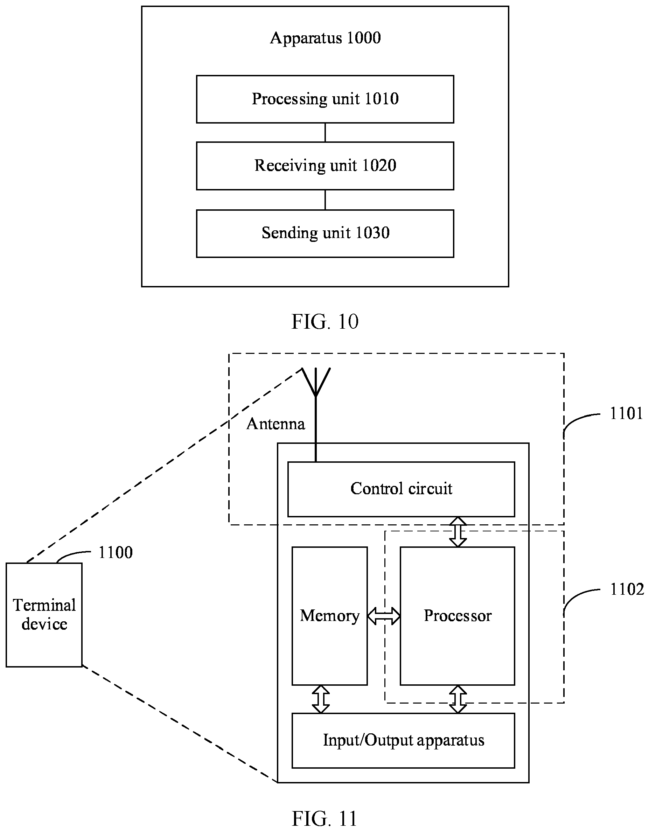

The foregoing describes in detail the method for configuring MDT provided in embodiments of this application with reference to FIG. 6 to FIG. 9. The following describes in detail an apparatus for configuring MDT provided in embodiments of this application with reference to FIG. 10 to FIG. 16.

FIG. 10 is a schematic diagram of an apparatus 1000 for configuring MDT according to this application. As shown in FIG. 10, the apparatus 1000 includes a processing unit 1010, a receiving unit 1020, and a sending unit 1030.

The receiving unit 1020 is configured to receive first MDT measurement configuration information and first indication information from a first network device, where the first indication information is used to indicate that a type of first MDT is signaling based MDT or management based MDT, and the first MDT measurement configuration information includes configuration information required by the apparatus to perform first MDT measurement.

The sending unit 1030 is configured to send second indication information to a second network device, where the second indication information is used to indicate the type of the first MDT, and the second network device is the same as or different from the first network device.

For example, that the sending unit 1030 sends the second indication information to the second network device includes:

The sending unit 1030 sends a first radio resource control RRC message to the second network device, where the first RRC message includes the second indication information, and the first RRC message includes any one of the following messages:
an RRC reconfiguration complete message, an RRC reestablishment complete message, or an RRC resume complete message.

For example, the sending unit 1030 is further configured to send the second indication information to a core network device.

For example, the apparatus further includes a processing unit 1010, configured to perform MDT measurement based on the first MDT measurement configuration information to obtain a first measurement result.

For example, the sending unit 1030 is further configured to send the first measurement result and the second indication information to the second network device.

For example, that the sending unit 1030 sends the first measurement result and the second indication information to the second network device includes:

The sending unit 1030 sends an uplink terminal device information response message to the second network device, where the uplink terminal device information response message includes the first measurement result and the second indication information.

For example, before the sending unit 1030 sends the first measurement result to the second network device, the sending unit 1030 is further configured to send third indication information to the second network device, where the third indication information is used to indicate a size of a first buffer buffer required for performing uplink data compression UDC based transmission on the first measurement result.

For example, the receiving unit 1020 is further configured to receive buffer configuration information from the second network device, where the buffer configuration information is used to configure a second buffer.

That the sending unit 1030 sends the first measurement result to the second network device includes:

The sending unit 1030 sends the first measurement result to the second network device by using a second RRC message, where uplink data compression processing is performed on the second RRC message based on the second buffer.

For example, the receiving unit 1020 is further configured to receive fourth indication information from the second network device, where the fourth indication information is used to indicate that the terminal device transmits a second measurement result through a second RLC entity, the second RLC entity is different from a first RLC entity for transmitting the first measurement result, and the second measurement result is a measurement result that needs to be reported after the first measurement result is reported.

The apparatus 1000 corresponds to the terminal device in the method embodiment. The apparatus 1000 may be the terminal device in the method embodiment, or a chip or a functional module in the terminal device in the method embodiment. A corresponding unit in the apparatus 1000 is configured to perform a corresponding step performed by the terminal device in the method embodiments shown in FIG. 6 to FIG. 9.

The processing unit 1010 in the apparatus 1000 is configured to perform the processing-related step corresponding to the terminal device in the method embodiments, for example, perform step S621 of performing first MDT measurement in FIG. 6, or perform step S721 of performing first MDT measurement in FIG. 7.

The receiving unit 1020 in the apparatus 1000 performs the step of receiving by the terminal device in the method embodiments, for example, performs step S610 of receiving the first MDT measurement configuration information and the first indication information that are sent by the first network device in FIG. 6, performs step S710 of receiving the first MDT measurement configuration information and the first indication information that are sent by the first network device in FIG. 7, performs step S811 of receiving the first MDT measurement configuration information and the first indication information that are sent by the first network device in FIG. 8, performs step S910 of receiving the buffer configuration information sent by the second network device in FIG. 9, or performs step S920 of receiving the fourth indication information sent by the second network device in FIG. 9.

The sending unit 1030 in the apparatus 1000 performs the step of sending by the terminal device in the method embodiments, for example, performs step S620 of sending the second indication information to the second network device in FIG. 6, performs step S720 of sending the second indication information to the core network device in FIG. 7, performs step S910 of sending the third indication information to the second network device in FIG. 9, or performs step S930 of sending the first measurement result to the second network device in FIG. 9.

The receiving unit 1020 and the sending unit 1030 may form a transceiver unit that has both receiving and sending functions. The processing unit 1010 may be at least one processor. The sending unit 1030 may be a transmitter or an interface circuit, and the receiving unit 1020 may be a receiver or an interface circuit. The receiver and the transmitter may be integrated together to form a transceiver or an interface circuit.

Optionally, the apparatus 1000 may further include a storage unit, configured to store data and/or signaling. The processing unit 1010, the sending unit 1030, and the receiving unit 1020 may interact with or be coupled to the storage unit, for example, read data and/or signaling in the storage unit, so that the method in the foregoing embodiment is performed.

The foregoing units may exist independently, or may be all or partially integrated.

FIG. 11 is a schematic diagram of a structure of a terminal device 1100 applicable to an embodiment of this application. The terminal device 1100 may be applied to the system shown in FIG. 1. For ease of description, FIG. 11 shows only main components of the terminal device. As shown in FIG. 11, the terminal device 1100 includes a processor, a memory, a control circuit, an antenna, and an input/output apparatus. The processor is configured to control the antenna and the input/output apparatus to send or receive a signal. The memory is configured to store a computer program. The processor is configured to invoke the computer program from the memory and run the computer program, to perform a corresponding procedure and/or operation performed by the terminal device in the method for configuring minimization of drive-tests MDT provided in this application. Details are not described herein again.

A person skilled in the art may understand that for ease of description, FIG. 11 shows only one memory and one processor. An actual terminal device may have a plurality of processors and a plurality of memories. The memory may also be referred to as a storage medium, a storage device, or the like. This is not limited in embodiments of this application.

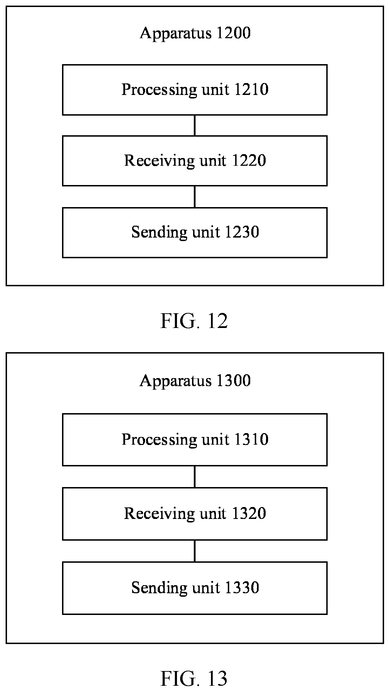

FIG. 12 is a schematic diagram of an apparatus 1200 for configuring MDT according to this application. As shown in FIG. 12, the apparatus 1200 includes a processing unit 1210, a receiving unit 1220, and a sending unit 1230.

The processing unit 1210 is configured to determine first MDT measurement configuration information and first indication information, where the first indication information is used to indicate that a type of first MDT is signaling based MDT or management based MDT, and the first MDT measurement configuration information includes configuration information required by a terminal device to perform first MDT measurement.

The sending unit 1230 is configured to send the first MDT measurement configuration information and the first indication information to the terminal device.

For example, the apparatus further includes:
the receiving unit 1220, configured to receive fifth indication information from a core network device, where the fifth indication information is used to indicate the type of the first MDT; and/or
the receiving unit 1220, further configured to receive signaling based MDT configuration information from the core network device.

For example, when the terminal device is handed over from the apparatus for configuring MDT shown in FIG. 12 to a third network device, the sending unit 1230 is further configured to send sixth indication information to the third network device, where the sixth indication information is used to indicate that the first network device configures the signaling based MDT for the terminal device.

The apparatus 1200 corresponds to the first network device in the method embodiment. The apparatus 1200 may be the first network device in the method embodiment, or a chip or a functional module in the first network device in the method embodiment. A corresponding unit in the apparatus 1200 is configured to perform a corresponding step performed by the first network device in the method embodiments shown in FIG. 6 to FIG. 9.

The sending unit 1230 in the apparatus 1200 performs the step of sending by the first network device in the method embodiments, for example, perform step S610 of sending the first MDT measurement configuration information and the first indication information to the terminal device in FIG. 6, or perform step S710 of sending the first MDT measurement configuration information and the first indication information to the terminal device in FIG. 7.

The receiving unit 1220 in the apparatus 1200 performs the step of receiving by the first network device in the method embodiments, for example, when the second network device and the first network device are a same network device, performs S722 of receiving the signaling based MDT configuration information sent by the core network device in FIG. 7, or performs S723 of receiving the fifth indication information sent by the core network device in FIG. 7.

The apparatus 1200 further includes the processing unit 1210, configured to perform corresponding processing-related steps in the first network device, for example, determine the first MDT measurement configuration information and the first indication information.

The receiving unit 1220 and the sending unit 1230 may form a transceiver unit that has both receiving and sending functions. The processing unit 1210 may be at least one processor. The sending unit 1230 may be a transmitter or an interface circuit. The receiving unit 1220 may be a receiver or an interface circuit. The receiver and the transmitter may be integrated together to form a transceiver or an interface circuit.

Optionally, the apparatus 1200 may further include a storage unit, configured to store data and/or signaling. The processing unit 1210, the sending unit 1230, and the receiving unit 1220 may interact with or be coupled to the storage unit, for example, read data and/or signaling in the storage unit, so that the method in the foregoing embodiment is performed.

The foregoing units may exist independently, or may be all or partially integrated.

FIG. 13 is a schematic diagram of an apparatus 1300 for configuring MDT according to this application. As shown in FIG. 13, the apparatus 1300 includes a processing unit 1310, a receiving unit 1320, and a sending unit 1330.

The receiving unit 1320 is configured to receive second indication information from a terminal device, where the second indication information is used to indicate a type of first MDT, the first MDT is MDT configured by a first network device for the terminal device, and the apparatus is the same as or different from the first network device.

The processing unit 1310 is configured to determine the type of the first MDT based on the second indication information.

For example, that the receiving unit 1320 receives the second indication information from the terminal device includes:

The receiving unit 1320 receives a first radio resource control RRC message from the terminal device, where the first RRC message includes the second indication information, and the first RRC message includes any one of the following messages:
an RRC reconfiguration complete message, an RRC reestablishment complete message, or an RRC resume complete message.

For example, the receiving unit 1320 is further configured to receive fifth indication information from a core network device, where the fifth indication information is used to indicate the type of the first MDT; and/or
the receiving unit 1320 is further configured to receive signaling based MDT configuration information from the core network device.

For example, that the receiving unit 1320 receives the second indication information from the terminal device includes:

The receiving unit 1320 receives an uplink terminal device information response message from the terminal device, where the uplink terminal device information response message includes a first measurement result and the second indication information, and the first measurement result is a measurement result obtained by the terminal device by performing MDT measurement.

For example, before the receiving unit 1320 receives the first measurement result from the terminal device, the receiving unit 1320 is further configured to receive third indication information from the terminal device, where the third indication information is used to indicate a size of a first buffer buffer required for performing uplink data compression UDC based transmission on the first MDT measurement result.

For example, the apparatus further includes the sending unit 1330, configured to send buffer configuration information to the terminal device, where the buffer configuration information is used to configure a second buffer.

For example, that the receiving unit 1320 receives the first MDT measurement result from the terminal device includes:
The receiving unit 1320 receives the first MDT measurement result from the terminal device by using a second RRC message, where UDC processing is performed on the second RRC message based on the second buffer.

For example, the sending unit 1330 is further configured to send fourth indication information to the terminal device, where the fourth indication information is used to indicate that the terminal device transmits a second MDT measurement result through a second RLC entity, and the second RLC entity is different from a first RLC entity for transmitting the first MDT measurement result.

The apparatus 1300 corresponds to the second network device in the method embodiment. The apparatus 1300 may be the second network device in the method embodiment, or a chip or a functional module in the second network device in the method embodiment. A corresponding unit in the apparatus 1300 is configured to perform a corresponding step performed by the second network device in the method embodiments shown in FIG. 6 to FIG. 9.

The sending unit 1330 in the apparatus 1300 performs the step of sending by the second network device in the method embodiments, for example, performs step S622 of sending the eighth indication information to the secondary network device in FIG. 6, performs step S724 of sending the eighth indication information to the secondary network device in FIG. 7, performs step S910 of sending the buffer configuration information to the terminal device in FIG. 9, or performs step S920 of sending the fourth indication information to the terminal in FIG. 9.

The receiving unit 1320 in the apparatus 1300 performs the step of receiving by the second network device in the method embodiments, for example, performs step S620 of receiving the second indication information sent by the terminal device in FIG. 6, performs S722 of receiving the signaling based MDT configuration information sent by the core network device in FIG. 7, performs S723 of receiving the fifth indication information sent by the core network device in FIG. 7, performs step S910 of receiving the third indication information sent by the terminal device in FIG. 9, or performs step S930 of receiving the first measurement result sent by the terminal device in FIG. 9.

The apparatus 1300 further includes the processing unit 1310, configured to perform corresponding processing-related steps in the second network device, for example, determine a type of first MDT.

The receiving unit 1320 and the sending unit 1330 may form a transceiver unit that has both receiving and sending functions. The processing unit 1310 may be at least one processor. The sending unit 1330 may be a transmitter or an interface circuit. The receiving unit 1320 may be a receiver or an interface circuit. The receiver and the transmitter may be integrated together to form a transceiver or an interface circuit.

Optionally, the apparatus 1300 may further include a storage unit, configured to store data and/or signaling. The processing unit 1310, the sending unit 1330, and the receiving unit 1320 may interact with or be coupled to the storage unit, for example, read data and/or signaling in the storage unit, so that the method in the foregoing embodiment is performed.

The foregoing units may exist independently, or may be all or partially integrated.

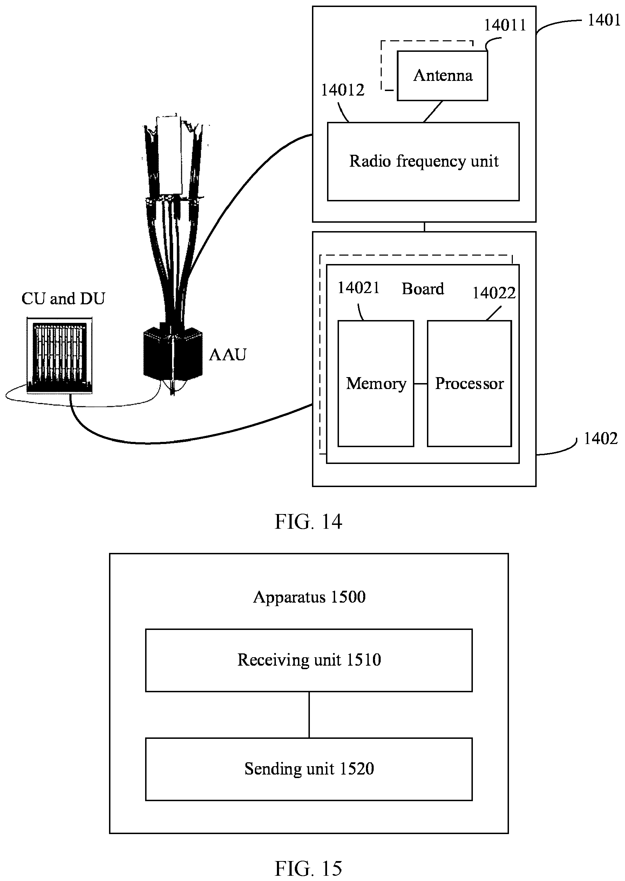

FIG. 14 is a schematic diagram of a structure of a network device 1400 to which an embodiment of this application is applicable, and may be configured to implement functions of the network device in the method for configuring MDT. The schematic diagram of the structure may be a schematic diagram of a structure of a first network device or a second network device.

In a possible manner, for example, in some implementation solutions in a 5G communication system, the network device 1400 may include a CU, a DU, and an AAU. Compared with a network device that is in an LTE communication system and that includes one or more baseband units (baseband units, BBUs) and one or more radio frequency units such as remote radio units (remote radio units, RRUs),
a non-real-time part of an original BBU is split and redefined as a CU, which is responsible for processing a non-real-time protocol and service, some physical layer processing functions of the BBU are combined into an AAU with an original RRU and a passive antenna, and remaining functions of the BBU are redefined as a DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form is consistent with that of a conventional 4G network device, in which the CU and the DU are deployed on same hardware. It should be understood that FIG. 13 is merely an example, and the protection scope of this application is not limited. For example, the deployment form may alternatively be that the DU is deployed in a 5G BBU equipment room, CUs or DUs are deployed together, or CUs are centralized at a higher level.

The AAU 1401 may implement a receiving and sending function, which is referred to as a transceiver unit 1401 and corresponds to the sending unit 1230 in FIG. 12 or the sending unit 1330 in FIG. 13. Optionally, the transceiver unit 1401 may also be referred to as a transceiver machine, a transceiver circuit, a transceiver, or the like, and may include at least one antenna 14011 and a radio frequency unit 14012. Optionally, the transceiver unit 1401 may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The CU and the DU 1402 may implement an internal processing function, which is referred to as a processing unit 1402. Optionally, the processing unit 1402 may control the first network device or the second network device, or the like, and may be referred to as a controller. The AAU 1401 and the CU and the DU 1402 may be physically disposed together, or may be physically disposed separately.

In addition, the first network device or the second network device is not limited to the form shown in FIG. 14, or may be in another form. For example, the first network device or the second network device includes a BBU and an ARU, or includes a BBU and an AAU, or may be a CPE, or may be in another form. This is not limited in this application.

It should be understood that the network device 1400 shown in FIG. 14 can implement the functions of the first network device or the second network device in method embodiments in FIG. 6 to FIG. 9. Operations and/or functions of units in the network device 1400 are respectively used to implement corresponding procedures performed by the first network device or the second network device in the method embodiments of this application. To avoid repetition, detailed descriptions are appropriately omitted herein. The structure of the network device shown in FIG. 14 is merely a possible form, but should not constitute any limitation to this embodiment of this application. This application does not exclude a possibility that there may be a network device structure in another form in the future.

FIG. 15 is a schematic diagram of an apparatus 1500 for configuring MDT according to this application. As shown in FIG. 15, the apparatus 1500 includes a receiving unit 1510 and a sending unit 1520.

The receiving unit 1510 is configured to receive second indication information from a terminal device, where the second indication information is used to indicate a type of first MDT, the first MDT is MDT configured by a first network device for the terminal device, and a second network device is the same as or different from the first network device.

The sending unit 1520 is configured to send fifth indication information to the first network device or the second network device based on the second indication information, where the fifth indication information is used to indicate the type of the first MDT; and/or
the sending unit 1520 is further configured to send signaling based MDT configuration information to the first network device or the second network device based on the second indication information.

The apparatus 1500 completely corresponds to the core network device in the method embodiment. The apparatus 1500 may be the core network device in the method embodiment, or a chip or a functional module in the core network device in the method embodiment. A corresponding unit in the apparatus 1500 is configured to perform a corresponding step performed by the core network device in the method embodiments shown in FIG. 6 to FIG. 9.

The apparatus 1500 may further include a processing unit, configured to perform the processing-related step corresponding to the core network device in the method embodiments, for example, determine, based on the second indication information, the type of the first MDT configured for the terminal device.

The receiving unit 1510 in the apparatus 1500 performs the step of receiving by the core network device in the method embodiments, for example, performs step S620 of receiving the second indication information sent by the terminal device in FIG. 7.

The sending unit 1520 in the apparatus 1500 performs the step of sending by the core network device in the method embodiments, for example, performs S722 of sending the signaling based MDT configuration information to the second network device in FIG. 7, or performs S723 of sending the fifth indication information to the second network device in FIG. 7.

The receiving unit 1510 and the sending unit 1520 may form a transceiver unit that has both receiving and sending functions. The processing unit may be at least one processor. The sending unit 1520 may be a transmitter or an interface circuit. The receiving unit 1510 may be a receiver or an interface circuit. The receiver and the transmitter may be integrated together to form a transceiver or an interface circuit.

Optionally, the apparatus 1500 may further include a storage unit, configured to store data and/or signaling. The processing unit, the sending unit 1520 and the receiving unit 1510 may interact with or be coupled to the storage unit, for example, read data and/or signaling in the storage unit, so that the method in the foregoing embodiment is performed.

The foregoing units may exist independently, or may be all or partially integrated.

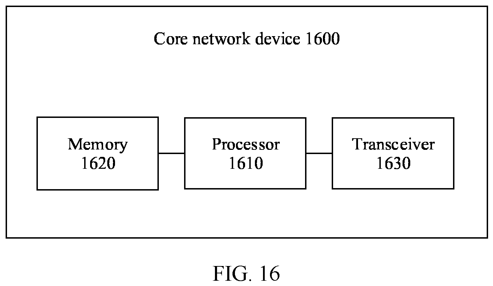

FIG. 16 is a schematic diagram of a structure of a core network device 1600 to which an embodiment of this application is applicable, and may be configured to implement functions of the core network device in the method for configuring MDT. The core network device 1600 includes a processor 1610, a memory 1620, and a transceiver 1630. The memory 1620 stores instructions or a program, and the processor 1610 is configured to execute the instructions or the program stored in the memory 1620. When the instructions or the program stored in the memory 1620 is executed, the transceiver 1630 is configured to perform the operations performed by the receiving unit 1510 and the sending unit 1520 in the apparatus 1500 shown in FIG. 15.

An embodiment of this application further provides a communication system. The communication system includes the foregoing first network device and second network device, and may further include the foregoing terminal device.

An embodiment of this application further provides a communication system. The communication system includes the foregoing first network device, second network device, and core network device, and may further include the foregoing terminal device.

This application further provides a computer-readable storage medium. The computer-readable storage medium stores instructions. When the instructions are executed by one or more processors, an apparatus including the processor is enabled to perform the steps performed by the terminal device in the foregoing methods shown in FIG. 6 to FIG. 9.

This application further provides a computer-readable storage medium. The computer-readable storage medium stores instructions. When the instructions are executed by one or more processors, an apparatus including the processor is enabled to perform the steps performed by the first network device in the foregoing methods shown in FIG. 6 to FIG. 9.

This application further provides a computer-readable storage medium. The computer-readable storage medium stores instructions. When the instructions are executed by one or more processors, an apparatus including the processor is enabled to perform the steps performed by the second network device in the foregoing methods shown in FIG. 6 to FIG. 9.

This application further provides a computer program product including instructions. When the computer program product is executed by one or more processors, an apparatus including the processor is enabled to perform the steps performed by the terminal device in the methods shown in FIG. 6 to FIG. 9.

This application further provides a computer program product including instructions. When the computer program product is executed by one or more processors, an apparatus including the processor is enabled to perform the steps performed by the first network device in the methods shown in FIG. 6 to FIG. 9.

This application further provides a computer program product including instructions. When the computer program product is executed by one or more processors, an apparatus including the processor is enabled to perform the steps performed by the second network device in the methods shown in FIG. 6 to FIG. 9.

This application further provides a chip, including a processor. The processor is configured to read and run a computer program stored in a memory, to perform a corresponding operation and/or procedure performed by the terminal device in the method for configuring MDT provided in this application. Optionally, the chip further includes a memory. The memory and the processor are connected to the memory by using a circuit or a wire. The processor is configured to read and execute a computer program in the memory. Further, optionally, the chip includes a communication interface. The processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the first network device in the method for configuring MDT provided in this application. Optionally, the chip further includes a memory. The memory and the processor are connected to the memory by using a circuit or a wire. The processor is configured to read and execute a computer program in the memory. Further, optionally, the chip includes a communication interface. The processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

This application further provides a chip, including a processor. The processor is configured to read and run a computer program stored in a memory, to perform a corresponding operation and/or procedure performed by the second network device in the method for configuring MDT provided in this application. Optionally, the chip further includes a memory. The memory and the processor are connected to the memory by using a circuit or a wire. The processor is configured to read and execute a computer program in the memory. Further, optionally, the chip includes a communication interface. The processor is connected to the communication interface. The communication interface is configured to receive data and/or information that need/needs to be processed. The processor obtains the data and/or information from the communication interface, and processes the data and/or information. The communication interface may be an input/output interface, an interface circuit, an output circuit, an input circuit, a pin, a related circuit, or the like in the chip. The processor may alternatively be embodied as a processing circuit or a logic circuit.

The foregoing chip may alternatively be replaced with a chip system, and details are not described herein again.

In this application, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code such as a USB flash drive, a removable hard disk, a read-only memory (read-only memory, ROM), a random access memory (random access memory, RAM), a magnetic disk, or an optical disc.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for configuring minimization of drive-tests MDT, wherein the method comprises:
receiving, by a terminal device, first MDT measurement configuration information and first indication information from a first network device, wherein the first indication information is used to indicate that a type of first MDT is signaling based MDT or management based MDT, and the first MDT measurement configuration information comprises configuration information required by the terminal device to perform first MDT measurement; and
sending, by the terminal device, second indication information to a second network device, wherein the second indication information is used to indicate the type of the first MDT, and the second network device is the same as or different from the first network device.

2. The method according to claim 1, wherein the sending, by the terminal device, second indication information to a second network device comprises:
sending, by the terminal device, a first radio resource control RRC message to the second network device, wherein the first RRC message comprises the second indication information, and the first RRC message comprises any one of the following messages:
an RRC reconfiguration complete message, an RRC reestablishment complete message, or an RRC resume complete message.

3. The method according to claim 1 or 2, wherein the method further comprises:
sending, by the terminal device, the second indication information to a core network device.

4. The method according to any one of claims 1 to 3, wherein the method further comprises:
performing, by the terminal device, MDT measurement based on the first MDT measurement configuration information to obtain a first measurement result; and
sending, by the terminal device, the first measurement result and the second indication information to the second network device.

5. The method according to claim 4, wherein the sending, by the terminal device, the first measurement result and the second indication information to the second network device comprises:
sending, by the terminal device, an uplink terminal device information response message to the second network device, wherein the uplink terminal device information response message comprises the first measurement result and the second indication information.

6. The method according to claim 4 or 5, wherein before the sending, by the terminal device, the first measurement result to the second network device, the method further comprises:
sending, by the terminal device, third indication information to the second network device, wherein the third indication information is used to indicate a size of a first buffer (buffer) required for performing uplink data compression UDC based transmission on the first measurement result.

7. The method according to claim 6, wherein the method further comprises:
receiving, by the terminal device, buffer configuration information from the second network device, wherein the buffer configuration information is used to configure a second buffer; and
the sending, by the terminal device, the first measurement result to the second network device comprises:
sending, by the terminal device, the first measurement result to the second network device by using a second RRC message, wherein uplink data compression processing is performed on the second RRC message based on the second buffer.

8. The method according to claim 6 or 7, wherein the method further comprises:
receiving, by the terminal device, fourth indication information from the second network device, wherein the fourth indication information is used to indicate that the terminal device transmits a second measurement result through a second RLC entity, the second RLC entity is different from a first RLC entity for transmitting the first measurement result, and the second measurement result is a measurement result that needs to be reported after or before the first measurement result is reported.

9. A method for configuring minimization of drive-tests MDT, wherein the method comprises:
determining, by a first network device, first MDT measurement configuration information and first indication information, wherein the first indication information is used to indicate that a type of first MDT is signaling based MDT or management based MDT, and the first MDT measurement configuration information comprises configuration information required by a terminal device to perform first MDT measurement; and
sending, by the first network device, the first MDT measurement configuration information and the first indication information to the terminal device.

10. The method according to claim 9, wherein the method further comprises:
receiving, by the first network device, fifth indication information from a core network device, wherein the fifth indication information is used to indicate the type of the first MDT; and/or
receiving, by the first network device, signaling based MDT configuration information from the core network device.

11. The method according to claim 9 or 10, wherein when the terminal device is handed over from the first network device to a third network device, the method further comprises:
sending, by the first network device, sixth indication information to the third network device, wherein the sixth indication information is used to indicate that the first network device configures the signaling based MDT for the terminal device.

12. A method for configuring minimization of drive-tests MDT, wherein the method comprises:
receiving, by a second network device, second indication information from a terminal device, wherein the second indication information is used to indicate a type of first MDT, the first MDT is MDT configured by a first network device for the terminal device, and the second network device is the same as or different from the first network device; and
determining, by the second network device, the type of the first MDT based on the second indication information.

13. The method according to claim 12, wherein the receiving, by a second network device, second indication information from a terminal device comprises:
receiving, by the second network device, a first radio resource control RRC message from the terminal device, wherein the first RRC message comprises the second indication information, and the first RRC message comprises any one of the following messages:
an RRC reconfiguration complete message, an RRC reestablishment complete message, or an RRC resume complete message.

14. The method according to claim 12 or 13, whereinthe method comprises:
receiving, by the second network device, fifth indication information from a core network device, wherein the fifth indication information is used to indicate the type of the first MDT; and/or
receiving, by the second network device, signaling based MDT configuration information from the core network device.

15. The method according to any one of claims 12 to 14, wherein the receiving, by a second network device, second indication information from a terminal device comprises:
receiving, by the second network device, an uplink terminal device information response message from the terminal device, wherein the uplink terminal device information response message comprises a first measurement result and the second indication information, and the first measurement result is a measurement result obtained by the terminal device by performing MDT measurement.

16. The method according to claim 15, wherein before receiving, by the second network device, the first measurement result from the terminal device, the method further comprises:
receiving, by the second network device, third indication information from the terminal device, wherein the third indication information is used to indicate a size of a first buffer buffer required for performing uplink data compression UDC based transmission on the first measurement result.

17. The method according to claim 16, wherein the method further comprises:
sending, by the second network device, buffer configuration information to the terminal device, wherein the buffer configuration information is used to configure a second buffer; and
the receiving, by the second network device, the first measurement result from the terminal device comprises:
receiving, by the second network device, the first measurement result from the terminal device by using a second RRC message, wherein UDC processing is performed on the second RRC message based on the second buffer.

18. The method according to claim 16 or 17, wherein the method further comprises:
sending, by the second network device, fourth indication information to the terminal device, wherein the fourth indication information is used to indicate that the terminal device transmits a second measurement result through a second RLC entity, the second RLC entity is different from a first RLC entity for transmitting the first measurement result, and the second measurement result is a measurement result that needs to be reported after or before the first measurement result is reported.

19. A method for configuring minimization of drive-tests MDT, wherein the method comprises:
receiving, by a core network device, second indication information from a terminal device, wherein the second indication information is used to indicate a type of first MDT, the first MDT is MDT configured by a first network device for the terminal device, and a second network device is the same as or different from the first network device; and
sending, by the core network device, fifth indication information to the first network device or the second network device based on the second indication information, wherein the fifth indication information is used to indicate the type of the first MDT; and/or
sending, by the core network device, signaling based MDT configuration information to the first network device or the second network device based on the second indication information.

20. A method for configuring minimization of drive-tests MDT, wherein the method comprises:
receiving, by a terminal device, first MDT measurement configuration information and first indication information from a first network device, wherein the first indication information is used to indicate that a type of first MDT is signaling based MDT or management based MDT; and
sending, by the terminal device, second indication information to a core network device, wherein the second indication information is used to indicate the type of the first MDT.

21. The method according to claim 20, wherein the sending, by the terminal device, second indication information to a core network device comprises:
sending, by the terminal device, a non-access stratum NAS message to the core network device, wherein the NAS message comprises the second indication information.

22. A method for configuring minimization of drive-tests MDT, wherein the method comprises:
receiving, by a second network device, fifth indication information from a core network device, wherein the fifth indication information is used to indicate a type of first MDT; or
receiving, by a second network device, signaling based MDT configuration information from a core network device.

23. A method for configuring minimization of drive-tests MDT, wherein the method comprises:
receiving, by a terminal device, first MDT measurement configuration information and first indication information from a first network device, wherein the first indication information is used to indicate that a type of first MDT is signaling based MDT or management based MDT; and
learning of, by the terminal device, the type of the first MDT based on the first indication information.

24. A method for configuring minimization of drive-tests MDT, wherein the method comprises:
determining, by a first network device, sixth indication information, wherein the sixth indication information is used to indicate that the first network device configures signaling based MDT for a terminal device; and
sending, by the first network device, the sixth indication information to a third network device.

25. The method according to claim 24, wherein the method further comprises:
sending, by the first network device, first MDT measurement configuration information and first indication information to the terminal device, wherein the first indication information is used to indicate that a type of first MDT is signaling based MDT or management based MDT.

26. A method for configuring minimization of drive-tests MDT, wherein the method comprises:
receiving, by a third network device, sixth indication information from a first network device, wherein the sixth indication information is used to indicate that the first network device configures signaling based MDT for a terminal device; and
determining, by the third network device based on the sixth indication information, that management based MDT does not need to be configured for the terminal device.

27. A method for configuring minimization of drive-tests MDT, wherein the method comprises:
determining, by a terminal device, third indication information, wherein the third indication information is used to indicate a size of a first buffer buffer required for performing UDC based transmission on a first measurement result, and the first measurement result is a measurement result obtained by the terminal device by performing MDT measurement; and
sending, by the terminal device, the third indication information to a second network device.

28. A method for configuring minimization of drive-tests MDT, wherein the method comprises:
receiving, by a second network device, third indication information from a terminal device, wherein the third indication information is used to indicate a size of a first buffer buffer required for performing uplink data compression UDC based transmission on a first measurement result; and
configuring, by the second network device based on the third indication information, a second buffer required for UDC based transmission, wherein the first measurement result is a measurement result obtained by the terminal device by performing MDT measurement.

29. The method according to claim 28, wherein the method further comprises:
sending, by the second network device, buffer configuration information to the terminal device, wherein the buffer configuration information is used to configure the second buffer; and
receiving, by the second network device, the first measurement result from the terminal device by using a second RRC message, wherein UDC processing is performed on the second RRC message.

30. An apparatus for configuring minimization of drive-tests MDT, wherein the apparatus comprises:
a receiving unit, configured to receive first MDT measurement configuration information and first indication information from a first network device, wherein the first indication information is used to indicate that a type of first MDT is signaling based MDT or management based MDT, and the first MDT measurement configuration information comprises configuration information required by the apparatus to perform first MDT measurement; and
a sending unit, configured to send second indication information to a second network device, wherein the second indication information is used to indicate the type of the first MDT, and the second network device is the same as or different from the first network device.

31. An apparatus for configuring minimization of drive-tests MDT, wherein the apparatus comprises:
a processing unit, configured to determine first MDT measurement configuration information and first indication information, wherein the first indication information is used to indicate that a type of first MDT is signaling based MDT or management based MDT, and the first MDT measurement configuration information comprises configuration information required by a terminal device to perform first MDT measurement; and
a sending unit, configured to send the first MDT measurement configuration information and the first indication information to the terminal device.

32. An apparatus for configuring minimization of drive-tests MDT, wherein the apparatus comprises:
a receiving unit, configured to receive second indication information from a terminal device, wherein the second indication information is used to indicate a type of first MDT, the first MDT is MDT configured by a first network device for the terminal device, and the apparatus is the same as or different from the first network device; and
a processing unit, configured to determine the type of the first MDT based on the second indication information.

33. An apparatus for configuring minimization of drive-tests MDT, wherein the apparatus comprises:
a receiving unit, configured to receive second indication information from a terminal device, wherein the second indication information is used to indicate a type of first MDT, the first MDT is MDT configured by a first network device for the terminal device, and a second network device is the same as or different from the first network device; and
a sending unit, configured to send fifth indication information to the first network device or the second network device based on the second indication information, wherein the fifth indication information is used to indicate the type of the first MDT; and/or
the sending unit, further configured to send signaling based MDT configuration information to the first network device or the second network device based on the second indication information.

34. An apparatus for configuring minimization of drive-tests MDT, wherein the apparatus comprises:
a receiving unit, configured to receive first MDT measurement configuration information and first indication information from a first network device, wherein the first indication information is used to indicate that a type of first MDT is signaling based MDT or management based MDT; and
a sending unit, configured to send second indication information to a core network device, wherein the second indication information is used to indicate the type of the first MDT.

35. An apparatus for configuring minimization of drive-tests MDT, wherein the apparatus comprises:
a receiving unit, configured to receive fifth indication information from a core network device, wherein the fifth indication information is used to indicate a type of first MDT; or
a receiving unit, configured to receive signaling based MDT configuration information from a core network device.

36. An apparatus for configuring minimization of drive-tests MDT, wherein the apparatus comprises:
a receiving unit, configured to receive first MDT measurement configuration information and first indication information from a first network device, wherein the first indication information is used to indicate that a type of first MDT is signaling based MDT or management based MDT; and
a processing unit, configured to learn of the type of the first MDT based on the first indication information.

37. An apparatus for configuring minimization of drive-tests MDT, wherein the apparatus comprises:
a processing unit, configured to determine sixth indication information, wherein the sixth indication information is used to indicate that a first network device configures signaling based MDT for a terminal device; and
a sending unit, configured to send the sixth indication information to a third network device.

38. An apparatus for configuring minimization of drive-tests MDT, wherein the apparatus comprises:
a receiving unit, configured to receive sixth indication information from a first network device, wherein the sixth indication information is used to indicate that the first network device configures signaling based MDT for a terminal device; and
a processing unit, configured to determine, based on the sixth indication information, that management based MDT does not need to be configured for the terminal device.

39. An apparatus for configuring minimization of drive-tests MDT, wherein the apparatus comprises:
a processing unit, configured to determine third indication information, wherein the third indication information is used to indicate a size of a first buffer buffer required for performing UDC based transmission on a first measurement result, and the first measurement result is a measurement result obtained by a terminal device by performing MDT measurement; and
a sending unit, configured to send the third indication information to a second network device.

40. An apparatus for configuring minimization of drive-tests MDT, wherein the apparatus comprises:
a receiving unit, configured to receive third indication information from a terminal device, wherein the third indication information is used to indicate a size of a first buffer buffer required for performing uplink data compression UDC based transmission on a first measurement result; and
a processing unit, configured to configure, based on the third indication information, a second buffer required for UDC based transmission, wherein the first measurement result is a measurement result obtained by the terminal device by performing MDT measurement.

41. A communication device, comprising:
a memory, wherein the memory is configured to store a computer program; and
one or more processors, wherein the processor is configured to execute the computer program in the memory, to enable the communication device to perform the method according to any one of claims 1 to 29.

42. A computer-readable storage medium, wherein the computer-readable medium stores a computer program; and when the computer program is executed by one or more processors, an apparatus comprising the processor is enabled to perform the method according to any one of claims 1 to 29.

43. A computer program product comprising instructions, wherein when the instructions are executed by a computer, an apparatus comprising a processor is enabled to perform the method according to any one of claims 1 to 29.

44. A communication system, comprising:
the apparatus for configuring minimization of drive-tests MDT according to claim 30, the apparatus for configuring minimization of drive-tests MDT according to claim 31, the apparatus for configuring minimization of drive-tests MDT according to claim 32, the apparatus for configuring minimization of drive-tests MDT according to claim 33, the apparatus for configuring minimization of drive-tests MDT according to claim 34, the apparatus for configuring minimization of drive-tests MDT according to claim 35, the apparatus for configuring minimization of drive-tests MDT according to claim 36, the apparatus for configuring minimization of drive-tests MDT according to claim 37, the apparatus for configuring minimization of drive-tests MDT according to claim 38, the apparatus for configuring minimization of drive-tests MDT according to claim 39, and the apparatus for configuring minimization of drive-tests MDT according to claim 40.
